(19) Europäisches Patentamt
European Patent Office
Office européen des brevets

(11) **EP 2 447 735 A1**

(12) **EUROPÄISCHE PATENTANMELDUNG**

(43) Veröffentlichungstag:
**02.05.2012 Patentblatt 2012/18**

(51) Int Cl.:
***G01S 17/02*** *(2006.01)*   ***G01C 11/02*** *(2006.01)*
***G01C 15/00*** *(2006.01)*

(21) Anmeldenummer: **11183405.7**

(22) Anmeldetag: **30.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **29.10.2010 DE 102010043136**

(71) Anmelder: **HILTI Aktiengesellschaft**
**9494 Schaan (LI)**

(72) Erfinder:
• **Gogolla, Torsten**
**9494 Schaan (LI)**
• **Doyen, Jean-Phillippe**
**8880 Walenstadt (CH)**
• **Tiefenthaler, Stefan**
**6812 Meiningen (AT)**
• **Würsch, Christoph**
**9470 Werdenberg (CH)**
• **Schmidt, Peer**
**88131 Lindau (DE)**
• **Habenbacher, Herwig**
**6806 Feldkirch-Tosters (AT)**

(54)   **Messgerät für eine berührungslose Messung von Abständen bei einem Zielobjekt**

(57)   Die Erfindung betrifft ein Messgerät (100A, 100B), insbesondere in Form eines Handgeräts, für eine berührungslose Messung von Abständen bei einem Zielobjekt (200), aufweisend:
- ein Gehäuse (10), insbesondere ein zur händischen Benutzung ausgebildetes Gehäuse (10);
- eine in dem Gehäuse (10) angeordnete, optische Messstrahlung (1) nutzende Distanzmesseinrichtung (20A, 20B), mittels welcher die Distanz (z) zwischen einem Referenzpunkt (NP) und wenigstens einem Messpunkt (P1) am Zielobjekt (200) berührungslos messbar ist, insbesondere mittels einer Laufzeitmessung;
- eine in dem Gehäuse angeordnete fotoelektrische Bilderfassung (60A, 60B), mit einer Sucher- und Kameraoptik (61) sowie einen diese verbindenden Bildpfad zur Erfassung von Zielpunkten (Z1, Z2) des Zielobjekts (200) einer Bildverarbeitungseinheit (62) zur Erstellung eines fotoelektrischen Bildes (4) des Zielobjektes (200),
- eine Steuer und Recheneinheit (SE) mittels welcher das Bild der Bildverarbeitungseinheit (62) zur Anzeige bringbar ist. Erfindungsgemäß ist vorgesehen, dass
- die Bildverarbeitungseinheit (62) ausgebildet ist, wenigstens eine Anzahl der Zielpunkte (Z1, Z2), insbesondere zusätzlich den Messpunkt (P1), als Anzahl von Bildpunkten (Z1', Z2') in genau einem einzigen fotoelektrischen Bild (4) zu definieren,
- die Steuer- und Recheneinheit (SE) ausgebildet ist, die Distanz (z) des Referenzpunkts (NP) zum Messpunkt (P1) wenigstens einem der Bildpunkte (Z1', Z2') zuzuordnen und die Zuordnung für eine Weiterverarbeitung verfügbar zu machen.

FIG. 7

**Beschreibung**

**Technisches Gebiet**

Die Erfindung betrifft ein Messgerät, insbesondere in Form eines Handgeräts, für eine berührungslose Messung eines Abstands bei einem Zielobjekt gemäß dem Oberbegriff des Anspruchs 1. Die Erfindung betrifft auch ein Verfahren gemäß dem Oberbegriff des Anspruchs 17.

**Stand der Technik**

Ein Messgerät der eingangs genannten Art kann insbesondere Anwendung als handgehaltener Distanzmesser finden, z.B. mit einer geeignet ausgebildeten Lasermesseinheit.

Eine berührungslose Messung einer Distanz zu einem Zielobjekt erfolgt zumeist unter Nutzung einer optischen Messstrahlung, wie z.B. Laserstrahlung. Grundsätzlich sind - unabhängig von der verwendeten Messstrahlung - unterschiedliche Verfahren zur Distanzmessung bekannt, beispielsweise lässt sich ein Distanz zu einem Zielobjekt berührungslos unter Verwendung einer Laufzeitmessung, einer Phasenmessung oder einer Lasertriangulation bestimmen. Zur Umsetzung solcher oder ähnlicher Verfahren sieht ein Gehäuse des Messgeräts eine im Gehäuse angeordnete optische Messstrahlung nutzende Distanzmesseinrichtung vor, mittels welcher der Distanz zum Zielobjekt berührungslos messbar ist. Eine beispielhafte, vorteilhaft ausgebildete Distanzmesseinrichtung zur berührungslosen Distanzmessung über eine Laufzeitmessung ist beispielsweise in DE 101 12 833 C1 beschrieben. Diese weist eine Strahlungseinheit in Form einer Lasereinheit auf. Darüber hinaus ist eine Optikeinheit mit Optikelementen zur Strahlungsführung vorgesehen. Die Optikelemente umfassen wenigstens eine Sende- und Empfangsoptik. Eine Sendeoptik ist in einem eine optische Achse aufweisenden optischen Sendepfad zur Aussendung von Messstrahlung auf das Zielobjekt angeordnet. Eine Empfangsoptik ist in einem eine optische Achse aufweisenden optischen Empfangspfad zum Empfang von vom Zielobjekt reflektierter bzw. zurückgestreuter Messstrahlung angeordnet.

Unter Distanz ist im Rahmen dieser Anmeldung ein zum Messpunkt am Zielobjekt gemessener Abstand zu verstehen. Insbesondere ist unter Distanz ein Abstand zu verstehen, der im Wesentlichen zwischen dem Messgerät und dem Zielobjekt besteht, konkret zwischen einem Referenzpunkt des Messgeräts und dem Messpunkt am Zielobjekt; also ist eine Distanz im wesentlichen quer - regelmäßig senkrecht - zu einer lateralen Oberfläche des Zielobjekts orientiert. Soweit der Begriff Abstand allgemeiner genutzt wird, sind damit Distanzen zum Zielobjekt umfasst. Soweit der Begriff Abstand speziell genutzt wird, ist damit insbesondere ein Abstand zwischen am Zielobjekt vorhandenen Zielpunkten gemeint, d.h. insbesondere Abstände auf einer oder im Wesentlichen gleichgerichtet zu einer lateralen Oberfläche des Zielobjekts. Vorliegend ist mit Abstand im Speziellen ein Abstand in der lateralen Oberfläche oder in einer lateralen Ebene des Zielobjekts oder einer solchen, die dem Zielobjekt zugeordnet ist, gemeint; ein Abstand ist im Speziellen also insbesondere am Zielobjekt selbst messbar.

Es handelt es sich somit bei Abständen im vorliegenden speziellen Fall um Entfernungen, die im Unterschied zu vorgenannten Distanzen einer direkten Messung mittels eines vorgenannten Distanzmessers nicht zugänglich sind. Dies betrifft beispielsweise zunächst Längen, aber auch ggfs. damit zusammenhängende Flächeninhalte, die beispielsweise an einer Gebäudefassade oder dergleichen zu finden sind. Diese sind über eine übliche vorgenannte erläuterte Distanzmessung nicht direkt messbar. Wünschenswert in der Praxis ist regelmäßig eine einfache, effektive und ggfs. bereits möglichst genaue Vermessung lateraler Abstände in Oberflächen oder Ebenen an einem Zielobjekt.

An sich bekannte Verfahren der Fotogrammetrie beispielsweise beschränken sich üblicher Weise jedoch auf eine bloße visuelle sogenannte 3D-Modellierung von Kameraaufnahmen, ohne dass damit eine Bemaßung lateraler Abstände am Zielobjekt oder in der Oberfläche oder in der Ebene des Zielobjekts verbunden wäre. Beispielsweise ist in WO 00/25089 ein Gerät zur dreidimensionalen Darstellung eines Objekts beschrieben, bei dem zwar eine Entfernungsmesseinheit Abstände einer Anzahl von Punkten eines Objekts innerhalb eines Zielgebiets aufnimmt. Eine Verknüpfung mit einem zweidimensionalen Bild des Zielobjekts erfolgt nur, um daraus eine dreidimensionale Darstellung des Objekts zu erzeugen ohne dass eine quantitative Angabe zu Abständen in der Ebene des Zielobjekts oder am Zielobjekt vorgesehen ist.

Aus EP 2 026 077 A1 ein System zur berührungslosen Aufnahme dreidimensionaler Koordinaten bekannt, das wie andere Systeme dieser Art relativ aufwändig ist. Dabei gelingt es ein Bildkoordinatensystem, welches sich auf das aufgenommene dreidimensionale Bild bezieht in das Objektkoordinatensystem, innerhalb welchem das Objekt zu vermessen ist, zu transformieren. Zum einen sind aber zwei oder mehrere Kameras erforderlich, welche das Zielobjekt aus unterschiedlichen Positionen gleichzeitig aufnehmen. Zum anderen sind Markierungen im Objektkoordinatensystem erforderlich, auf denen die vorgenannte Transformation basiert.

Solche Systeme sind für Anwendungen auf Baustellen oder bei Konstruktions- und Renovierungsarbeiten m.E. noch zu aufwändig und störungsanfällig und damit letztlich nicht handhabbar. Insbesondere ist die Anbringung von Markierungen in einem Objektkoordinatensystem möglichst zu vermeiden, da dies selbstredend bei weit entfernten Zielobjekten oder bei schlicht nicht zugänglichen Zielobjekten unmöglich oder sehr aufwändig ist. Insbesondere birgt die Anbringung von Markierungen am Zielobjekt Unfallgefahren, die letztlich zu vermeiden sind.

Vielmehr ist es wünschenswert, die Messung von lateralen Abständen an einem Zielobjekt - gegebenenfalls zusätzlich auch die Messung von Distanzen zu dem Zielobjekt- einfacher, sicherer und effizienter zu gestalten. Es hat sich auch gezeigt, dass im üblicherweise anfallenden Anforderungsprofil an Baustellen oder dergleichen bereits eine Genauigkeit im Prozentbereich ausreichend ist, um Anforderungen für erste Anwenderbedürfnisse erfüllen zu können. Vergleichsweise einfache Anforderungsprofile bestehen beispielsweise, wenn es darum geht Oberflächen am Zielobjekt -insbesondere laterale Flächen und diese kennzeichnende laterale Abstände auf dem Zielobjekt- zu bestimmen.

Ein eingangs genanntes Messgerät mit einem Gehäuse sowie mit einer im Gehäuse angeordneten, optische Messstrahlung nutzenden Distanzmesseinrichtung und mit einer in dem Gehäuse angeordneten fotoelektrischen Bilderfassung bietet dazu einen Ansatz. Dieser Ansatz kann jedoch einfacher gestaltet werden als dies beispielsweise in EP 2 023 077 A1 beschrieben ist. Grundsätzlich ist es bekannt -ähnlich eines Messgeräts der eingangs genannten Art- eine Distanzmesseinrichtung zur Distanzmessung und eine fotoelektronische Bilderfassung in einem Gehäuse zu kombinieren.

Ein eingangs genanntes Messgerät ist beispielsweise aus WO 2008/155657 oder JP 08021878 bekannt. In solchen Messgeräten sind eine Distanzmesseinrichtung und eine fotoelektrische Bilderfassung jedoch ungekoppelt in einem Gehäuse realisiert, wobei lediglich ein Bild eines Messpunkts am Zielobjekt mit einem fotoelektrischen Bild softwarebasiert überlagert wird. So wird in JP 08021878 die mit Hilfe des Fotodiodenarrays festgestellte Position eines gescannten Messpunkts der Distanzmesseinrichtung mit dem fotoelektrischen Bild des Zielobjekts im Rahmen der Softwareanwendung überlagert und erst dann auf einem Display dargestellt. Ähnlich wird bei WO 2008/155657 das Display des Distanzmessers und das fotoelektrische Bild einer Kamera überlagert. Solche softwarebasierten Lösungen erweisen sich als unzureichend in kompakten, insbesondere handgehaltenen Messgeräten.

Dem entsprechend dienen Lösungen wie die in EP 1 407 227 B1 lediglich dazu, einen Messpunkt am Zielobjekt mittels der fotoelektrischen Bilderfassung sichtbar zu machen - anders ausgedrückt wirkt bei diesen Systemen eine fotoelektrische Bilderfassung wie ein Visier, um den Messpunkt einer Distanzmesseinrichtung am Zielobjekt für das Auge des Anwenders sichtbar zu machen. Das Messen von lateralen Abständen am Zielobjekt, insbesondere auf Oberflächen oder auf lateralen Flächen des Zielobjekts, ist damit nicht möglich.

In DE 100 55 510 B4 der Anmelderin ist ein eingangs genanntes Messgerät offenbart, bei dem in einem Gehäuse eine Distanzmesseinrichtung und zusätzlich eine fotoelektrische Bilderfassung vorgesehen ist. Eine Steuer- und Recheneinheit dient dazu, einen virtuellen Messfleck zu berechnen und graphisch auf dem Display darzustellen, so dass ein Parallaxefehler für eine Distanzmessung korrigierbar ist. Auch ein solches Messgerät misst lediglich Distanzen zwischen dem Messgerät und dem Zielobjekt, ohne dass laterale Abstände am Zielobjekt selbst bestimmbar wären.

An dieser Stelle setzt die Erfindung an, deren Aufgabe es ist, ein Messgerät und ein Verfahren der eingangs genannten Art anzugeben, mittels dem auf vergleichsweise effiziente, insbesondere einfache Weise Abstände bei einem Zielobjekt bestimmbar sind. Insbesondere sollen laterale Abstände auf einer Oberfläche des Zielobjekts wie beispielsweise laterale Abstände auf einer Ebene des Zielobjekts bestimmbar sein. Insbesondere soll es möglich sein, die lateralen Abstände am Zielobjekt jedenfalls näherungsweise anzugeben. Insbesondere soll die Basis dafür geschaffen werden, auch bei einem leicht handhabbaren Messgerät, insbesondere in Form eines Handgeräts, eine leicht zu visualisierende Dokumentation und Attributierung von gemessenen Abständen, d. h. insbesondere lateralen Abständen am Zielobjekt zu ermöglichen. Insbesondere sollen zusätzlich Distanzen zwischen dem Messgerät und dem Zielobjekt angebbar sein.

Betreffend das Messgerät wird die Aufgabe durch die Erfindung mittels einem Messgerät der eingangs genannten Art gelöst, bei dem erfindungsgemäß die Merkmale des kennzeichnenden Teils des Anspruchs 1 vorgesehen sind. Betreffend das Verfahren wird die Aufgabe durch die Erfindung mittels eines Verfahrens der eingangs genannten Art gelöst, bei dem erfindungsgemäß die Merkmale des kennzeichnenden Teils des Anspruchs 17 vorgesehen sind.

Die Erfindung geht von der Überlegung aus, dass sich eine Steuer- und Recheneinheit insbesondere mit einem Speicher und unter Berücksichtigung verfügbarer Rechen- und Speicherleistungen- auch in Handmessgeräten derart auslegen lässt, dass unter Verwendung der Ergebnisse einer Distanzmesseinrichtung und einer fotoelektrischen Bilderfassung eine jedenfalls näherungsweise Angabe lateraler Abstände am Zielobjekt möglich ist. Die Erfindung geht weiter von der Überlegung aus, dass eine Vereinfachung eines Bearbeitungsprozesses in der Steuer- und Recheneinheit gemäß dem vorgeschlagenen Konzept vorteilhaft ist. Dazu sieht die Erfindung zunächst eine Bildverarbeitungseinheit vor, die ausgebildet ist, wenigstens eine Anzahl der Zielpunkte am Zielobjekt als Anzahl von korrespondierenden Bildpunkten in mindestens einem fotoelektrischen Bild zu definieren. Unter einer Anzahl von Punkten sind vorliegend eine ganze Zahl von eins, zwei, drei , vier, usw. und mehr Punkten zu verstehen. Der Messpunkt kann, muss aber nicht, Teil des Bildes sein. Vorteilhaft ist ein Messpunkt Teil des Bildes. Insbesondere kann ein Messpunkt einer der Zielpunkte sein. Dies wird normalerweise nicht der Fall sein, kann sich aber als vorteilhaft erweisen. Mit anderen Worten basiert das Konzept der Erfindung auf der Auswertung zunächst genau eines fotoelektrischen Bildes und des mit dem fotoelektrischen Bild aufgenommenen einzigen Messpunkts. Insofern kann das Konzept der Erfindung bereits vorteilhaft anhand eines einzigen mit einer einmaligen Aufnahme gewonnenen fotoelektrischen Bildes realisiert werden. Insbesondere ist es ausreichend zur Realisierung des Konzepts, dass die fotoelektrische Bilderfasssung eine einzige Sucheroptik und Kameraoptik aufweist. Die Erfindung ist jedoch nicht beschränkt darauf. Gleichwohl liegt ein maßgeblicher Vorteil des Konzepts in seiner vergleichsweise einfachen Realisierbarkeit.

Die Erfindung hat erkannt, dass die Distanzmesseinrichtung gleichzeitig oder zeitnah zur Aufnahme des fotoelektrischen Bildes eine Distanz zwischen einem Referenzpunkt und dem Messpunkt am Zielobjekt liefert. Dem entsprechend sieht die Erfindung weiter vor, dass die Steuer- und Recheneinheit ausgebildet ist, den einem Zielpunkt entsprechenden und definierten Bildpunkt der Distanz des Referenzpunktes zum Messpunkt zuzuordnen. Eine so gebildete Zuordnung zwischen der von der Distanzmesseinrichtung gelieferten Distanz zum Messpunkt einerseits und einem im Bild der fotoelektrischen Bilderfassung definierten Bildpunkt andererseits erweist sich als ausreichende Basis, um insbesondere laterale Abstände am Zielobjekt jedenfalls näherungsweise bestimmen zu können.

Eine Zuordnung kann in grundsätzlich unterschiedlicher Weise im Rahmen des Konzepts der Erfindung realisiert werden, z.B. durch einen geeigneten Verweis eines entsprechenden Werts für die Distanz und des Bildpunkts aufeinander. Die Werte können in Listen oder Feldern oder sonstigen der Wertzuordnung dienenden Zuordnungen aufgeführt sein. Im Rahmen einer Weiterbildung kann die Zuordnung als z.B. separiertes oder durch gegenseitigen Bezug gebildetes Zahlenfeld verfügbar sein. Vorzugsweise kann die Definition eines Bildpunktes als Pixelkoordinate und die Distanz als Distanzmaß verfügbar sein. Besonders vorteilhaft umfasst die Zuordnung als Zahlentripel die Pixelkoordinatendifferenz der Pixel zweier Bildpunkte und der Distanz des Referenzpunkts zum Messpunkt als Distanzmaß. Die Steuer und Recheneinheit lässt sich vorteilhafterweise mit einem Speicher ausbilden, wobei die Zuordnung der Distanz und des wenigstens einen Bildpunktes als Zuordnung im Speicher abgelegt ist.

Im Rahmen einer besonders vorteilhaften Weiterbildung der Erfindung ist vorgesehen, dass genau ein einziges fotoelektrisches Bild aus einer einzigen Aufnahme des Zielobjekts resultiert. Insbesondere ist dazu vorgesehen, dass dem fotoelektrischen Bild genau ein Messpunkt zugeordnet ist. Vorteilhaft ist der Messpunkt einer der Anzahl von Bildpunkten in dem einzigen fotoelektrischen Bild aber nicht einer derjenigen Bildpunkte, die einem Zielpunkt zugeordnet sind. Eine solche Aufnahme eines fotoelektrischen Bildes mit Messpunkt sowie einer zusätzlichen Distanzmessung zum Messpunkt kann mit einer einzigen Sucheroptik und Kameraoptik erfolgen, was die Auslegung des Messgeräts erheblich vereinfacht.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer vorteilhaften Weiterbildung lässt sich die Zuordnung beispielsweise als Zahlentripel -umfassend die Definition eines Bildpunkts als Pixelkoordinate und der Distanz als Distanzmaß- zur Verfügung stellen. Das Zahlentripel eignet sich vorteilhaft für eine Weiterverarbeitung durch die Steuer- und Recheneinheit. Die Steuer- und Recheneinheit kann dazu in einer besonders bevorzugten Weise beispielsweise ein Abstandsmodul aufweisen.

Das Abstandsmodul ist vorteilhaft ausgebildet, einen Abstand zwischen einem ersten Bildpunkt und einem zweiten Bildpunkt als Pixelabstand zu definieren und dem Pixelabstand ein Abstandsmaß zuzuordnen, das dem Abstand der den Bildpunkten entsprechenden Zielpunkte am Zielobjekt entspricht. Dies kann beispielsweise im Rahmen eines geeignet programmierten Softwaremoduls zur Bildverarbeitung ausgeführt sein. Im Rahmen einer besonders bevorzugten Weiterbildung ist vorgesehen, dass das Abstandsmodul einen Eingang für ein Referenzmaß aufweist und ausgebildet ist, aus dem Referenzmaß und einem Distanzmaß zum Messpunkt zumindest näherungsweise einen Bildmassstab als Bildumrechnungsfaktor zu bestimmen. Der Bildumrechnungsfaktor dient besonders bevorzugt dazu, dem genannten Pixelabstand ein Abstandsmaß zuzuordnen. Dieser Ansatz macht es möglich, unter verfügbarer Rechenleistung auch in einem Handgerät laterale Abstände am Zielobjekt mit Abstandsmaß zu erfassen. Im Rahmen einer besonders effizient gestalteten Weiterbildung der Erfindung hat es sich als vorteilhaft erwiesen, dass ein erstes Referenzmaß als eine Fokuslänge der Sucher- und/oder Kameraoptik gebildet ist. Die Fokuslänge der Sucher- und/oder Kameraoptik dient insofern in vorteilhafter Weise dazu, dem Pixelabstand ein Abstandsmaß zuordnen zu können. Ein zweites Referenzmaß ist vorteilhaft als eine Pixelgröße gebildet. Die Pixelgröße kann in unterschiedlichen Pixelkoordinatenrichtungen des Bildes unterschiedlich sein. Die Pixelgröße kann vorteilhaft isotrop genähert sein. Besonders vorzugsweise ist ein Bildmaßstab als Verhältnis aus einer Fokuslänge und einer Distanz multipliziert mit einer Pixelgröße bestimmt. Wie von der Weiterbildung erkannt führt die Verwendung insbesondere des ersten und des zweiten Referenzmaßes zu einer bevorzugten Bestimmung des Bildmaßstabs, die zudem mit vergleichsweise wenig Rechenleistung durchführbar ist und zudem bereits zu jedenfalls näherungsweise gut verwendbaren Ergebnissen führt. Auf diese Weise ist es besonders gut möglich, dem Konzept der Erfindung folgend, praktisch zusammen mit einer Distanzmessung und Aufnahme eines fotoelektrischen Bildes, einen Messpunkt der Distanzmesseinrichtung eindeutig im fotoelektrischen Bild des Zielobjekts zu identifizieren und unter Bezugnahme auf ein Referenzmaß, laterale Abstände am Zielobjekt anzugeben.

Vorzugsweise resultiert das genau eine einzige fotoelektrische Bild aus einer einzigen Aufnahme des Zielobjekts und dem fotoelektrischen Bild ist genau ein Messpunkt zugeordnet. Insbesondere ist vorgesehen, die Anzahl von Zielpunkten im Wesentlichen in einer Ebene, in der sich auch der Messpunkt befindet, für die Zielpunkte in dem genau einen einzigen fotoelektrischen Bild zu definieren. Die auch als Referenzebene bezeichnete Ebene kann vorteilhaft durch den Messpunkt und einen Normalenvektor festgelegt sein, der vorteilhaft in etwa durch die Blickrichtung der Kamera gegeben ist. Diese weiterbildende Festlegung der Referenzebene geht insbesondere von der vorteilhaften Annahme aus, dass ein Anwender eine Messung im Wesentlichen aus einer senkrechten Richtung zu einer zu vermessenden Ebene des Zielobjekts auslöst. Insbesondere lässt sich das Konzept der Weiterbildung mit noch vertretbarer Genauigkeit auf zu vermessende Abstände in einer Referenzeben anwenden, die in etwa einen Winkel von $90° \pm 25°$ zu einer Blickrichtung der Kamera bildet. In anderen Fällen, insbesondere in Fällen, in denen der Messpunkt in einer Abstände aufweisenden Ebene liegt, die einen spitzen Winkel zur Blickrichtung bildet, hat es sich als vorteilhaft erwiesen, durch geeignete Bildverarbeitungsalgorithmen, ggf. unter Verwendung von Zusatzsensordaten und Benutzerinteraktionen, die die zu vermessenden Abstände definierenden Zielpunkte in eine Referenzebene zu transformieren, welche die obigen vorteilhaften Vorrausetzungen erfüllt Dies kann beispielsweise durch eine Drehung der Ebene um den Messpunkt erfolgen. Ein Messpunkt sollte dazu möglichst in der Nähe des zu vermessenden lateralen Abstands liegen. Allgemein kann wenigstens durch den Messpunkt am Zielobjekt und dessen Distanz -insbesondere auch Distanzrichtung- zum Referenzpunkt im Messgerät -ggfs. unterstützt durch Verarbeitung des fotoelektrischen Bildes in einer Bildverarbeitungseinheit und/oder durch eine Benutzerinteraktion- eine Referenzebene am Zielobjekt festgelegt sein In der Referenzebene - ggfs. bloß näherungsweise - kann eine Position einer Anzahl von Zielpunkten definiert sein. Insbesondere hat es sich im Allgemeinen als ausreichend erwiesen, wenn die Anzahl von Distanzpunkten im Rahmen einer akzeptablen Abweichung, die klein gegen die Distanz ist, lediglich in der Nähe der Referenzebene liegen. Dies umfasst beispielsweise die häufig anzutreffende Situation, in welcher der Messpunkt an einer im Grossteil im wesentlichen ebenen Fläche des Zielobjekts, wie einer Gebäudefassade oder dergleichen, platziert ist während die die zu messenden lateralen Abstände definierenden Zielpunkte selbst vor oder hinter der genannten ebenen Fläche liegen. Die ist in einer vorgenannten Situation beispielsweise häufig der Fall für Balkone, Fensterbänke, Türausnehmungen und dergleichen in der Gebäudefassade. Diese Näherungen umfassende Weiterbildung ist vorteilhaft für die meisten Anwendungen, in denen ebene Flächen zu vermessen sind, wie z.B. Wände oder dergleichen. Eine vergleichsweise genaue Bestimmung lateraler Abstände in einer solchen Ebene wird vorteilhaft erreicht, wenn diese als Referenzebene praktisch senkrecht zur Blickrichtung der fotoelektrischen Bilderfassung (Normalenrichtung) orientiert ist und wenn sich in dieser der Messpunkt befindet. Insbesondere solche Ebenen werden hier als Referenzebene und deren Normale als Referenznormale bezeichnet. Im Rahmen einer weiteren vorteilhaften Weiterbildung der Erfindung ist vorgesehen, dass die Steuer- und Recheneinheit ein Fügemodul aufweist, das ausgebildet ist, eine Anzahl von einzelnen je aus einer einzigen Aufnahme des Zielobjekts resultierende fotoelektrische Bildern mit je genau einem zugeordneten Messpunkt, zusammen zu verarbeiten, insbesondere in Kombination zu verarbeiten , insbesondere zu einem Panoramabild zusammenzusetzen. Vorteilhaft können mehrere fotoelektrische Bilder aus mehreren Aufnahmen des Zielobjekts resultieren. Insbesondere ist dazu vorgesehen, dass jedem fotoelektrischen Bild genau ein Messpunkt zugeordnet ist, nämlich als einer der Anzahl von Bildpunkten in dem jeweiligen fotoelektrischen Bild. Insbesondere kann ein lateraler Abstand zwischen einem ersten Bildpunkt in einem ersten Bild und einem zweiten Bildpunkt in einem zweiten Bild als Pixelabstand definiert werden und dem Pixelabstand ein Abstandsmaß der Zielpunkte zugeordnet werden. Vorteilhaft kann die Bildverarbeitung dazu ausgebildet sein, derart Zusammenhänge zwischen dem ersten Bild und dem zweiten Bild zu bilden, dass ein Pixelabstand angebbar und -ggfs. mit unterschiedlichem Bildmassstab im ersten und zweiten Bild- dem Pixelabstand ein Abstandsmaß der Zielpunkte zuzuordnen ist.

Im Rahmen einer weiteren vorteilhaften Weiterbildung der Erfindung ist vorgesehen, dass genau ein fotoelektrisches Bild aus mehreren Einzelaufnahmen des Zielobjekts resultiert und als Panoramabild aus den mehreren Einzelaufnahmen des Zielobjekts zusammengesetzt ist. Dabei ist jeder Einzelaufnahme des Zielobjektes genau ein Messpunkt der Distanzmessung zugeordnet. Dem einzigen zusammengesetzten fotoelektrischen Bild sind somit mehrere, dem Einzelbildern entsprechende Messpunkte zugeordnet, nämlich als einer der Anzahl von Bildpunkten in dem einzigen zusammengesetzten fotoelektrischen Bild. Vorteilhaft kann das Fügemodul ausgebildet sein, dem Panoramabild, eine aus den zugeordneten Messpunkten gebildete Anzahl von Messpunkten, insbesondere eine Anzahl von gemittelten, ggfs. einen einzigen Messpunkt zuzuordnen.

Besonders vorteilhaft lässt sich das Abstandsmodul weiterbilden, um eine Anzahl von Abstandsmaße zwischen einer Anzahl von Zielpunkten in einer Fläche des genau einen einzigen fotoelektrischen Bildes zu definieren. Auf diese Weise lässt sich vorteilhaft eine ganze Reihe von Längen in einer lateralen Oberfläche des Zielobjekts bestimmen. Beispielsweise lassen sich diese an markanten Positionen des Bildes festmachen. Eine Definition der Positionen kann -ganz oder teilweise- automatisch erfolgen, z.B. kontrastbasiert oder mittels einer sonstigen bildverarbeitenden optisch auswertenden Filterfunktion einer Bildverarbeitungseinheit und/oder Steuer- und Recheneinheit. Eine Definition kann auch -ganz oder teilweise- mittels Anwenderinteraktion erfolgen, insbesondere in Form einer Anwenderinteraktion über eine Eingabevorrichtung oder die elektronische Anzeigeeinrichtung. Die elektronische Anzeigeeinrichtung lässt sich dazu z.B. als Touchscreen-Einrichtung mit geeigneter Funktionalität, z.B. Snap-Funktion (Zuordnen einer ungefähren Berührungsposition an eine markante Bildposition in der Nähe).

Konkret lässt sich auf diese Weise z. B. eine Fassade eines Gebäudes komplett vermaßen. Basierend darauf hat es sich auch als vorteilhaft erwiesen, ein Flächenmaß innerhalb einer Anzahl von Zielpunkten gebildeten Polyeders in einer Fläche des genau einen einzigen fotoelektrischen Bildes zu definieren. Ein Anwender kann ein solches jedenfalls näherungsweise bestimmtes Flächenmaß in angemessener Weise nutzen, um beispielsweise den Baustoff für eine zu bearbeitende Fläche abschätzen zu können.

Insbesondere eignet sich das Konzept der Erfindung in einer Weiterbildung dazu, eine elektronische Anzeigeeinrichtung weiterzubilden, um die Dokumentation und Attributierung von gemessenen Abständen auf einer lateralen Oberfläche oder Fläche des Zielobjekts zufriedenstellend für einen Anwender zu visualisieren. Beispielsweise kann die elektronische Anzeigeeinrichtung ausgebildet sein, wenigstens ein Abstandsmaß und/oder Flächenmaß zwischen wenigstens einem ersten Bildpunkt und einem zweiten Bildpunkt im Bild anzuzeigen.

Insbesondere kann dies oder anderes eine Anzeige ohne eine angegebene Distanz zum Messpunkt der Distanzmesseinrichtung sein. Es hat sich gezeigt, dass ein Anwender nicht in jedem Fall die Distanz zum Messpunkt benötigt, sondern stattdessen vielmehr an lateralen Abständen auf einer lateralen Oberfläche des Zielobjekts interessiert ist. Gleichwohl kann in einer vorteilhaften Weiterbildung eine elektronische Anzeigeeinrichtung im Gehäuse ausgebildet sein, alternativ oder zusätzlich zum Abstandsmaß eine Distanz zum Messpunkt anzuzeigen.

Die Distanzmesseinrichtung weist vorteilhaft auf: eine Strahlungseinheit, insbesondere Lasereinheit und eine Optikeinheit mit Optikelementen wenigstens umfassend: eine Sende- und Empfangsoptik, einen eine optische Achse aufweisenden optischen Sendepfad zur Aussendung von Messstrahlung auf das Zielobjekt, und einen eine optische Achse aufweisenden optischen Empfangspfad zum Empfang von vom Messpunkt reflektierter Messstrahlung.

Vorteilhaft ist der Sendepfad über ein separates Ausgangselement der Sendeoptik, insbesondere eine Auskoppellinse, biaxial zum Empfangspfad geführt. Alternativ kann der Sendepfad auch über ein gemeinsames Ausgangselement der Sende- und Empfangsoptik, insbesondere über eine Kollimatorlinse, koaxial zum Empfangspfad geführt sein.

Die optische Messstrahlung nutzende Distanzmesseinrichtung, mittels welcher die Distanz zum Zielobjekt berührungslos messbar ist, kann vorteilhaft in einer sogenannten biaxialen Variante oder vorteilhaft in einer sogenannten koaxialen Variante realisiert sein. Die vorgenannte Benennung bezieht sich dabei auf die relative Anordnung von Sendepfad und Empfangspfad zueinander. Bei der biaxialen Variante ist vorteilhaft vorgesehen, dass der Sendepfad über ein separates Ausgangselement der Sendeoptik biaxial zum Empfangspfad geführt ist. Das Ausgangselement der Sendeoptik kann vorteilhaft eine Auskoppellinse oder dergleichen sein.

Die Distanzmesseinrichtung und die fotoelektrische Bilderfassung lassen sich konstruktiv im Messgerät vorteilhaft realisieren, wobei je nach Bedarf unterschiedliche Varianten möglich sind. Grundsätzlich lässt sich ein Sendepfad, ein Empfangspfad und ein Bildpfad von Distanzmesseinrichtung und fotoelektrischer Bilderfassung separat (auch als biaxial bezeichnet) realisieren oder jedenfalls teilweise zusammenlegen (auch als koaxial bezeichnet). Für eine vollständig koaxiale Anordnung der Pfade kann insbesondere ein gemeinsames Ausgangselement des Bildpfads sowie des Sende- und/der Empfangspfads vorgesehen sein.

Es hat sich gezeigt, dass im Rahmen einer Weiterbildung die Steuer- und Recheneinheit erweitert werden kann, um optische Verzerrungen bei der fotoelektrischen Bilderfassung zu korrigieren. Vorzugsweise weist die Steuer- und Recheneinheit und/oder die Bildverarbeitungseinheit ein Transformationsmodul auf, das ausgebildet ist, dem Abstandsmodul ein Korrekturmaß für eine insbesondere perspektivische Verzerrung eines Polyeders zur Verfügung zu stellen, das von einer Anzahl von Zielpunkten gebildet ist. Mit dem Transformationsmodul lassen sich zusätzlich oder alternativ, ggf. unter Verwendung zusätzlicher Sensordaten z.B. eines Neigungssensors, Drehratensensors od. dgl. oder einer Benutzerinteraktion, Zielpunkte in die Referenzebene transformieren. Insbesondere betrifft dies Korrekturen zu perspektivischen Verzerrungen bezüglich eines Fluchtpunktes. Weiter vorteilhaft ist ein Korrekturmodul zur Korrektur von Bildverzerrungen bzw. Bildverzeichnungen, hervorgerufen durch Elemente der Bilderfassung vorgesehen, wobei auch temperaturabhängige Effekte modellbasiert oder mit Tabellenwerten korrigierbar sind.

Das Messgerät eignet sich in besonders vorteilhafter Weise, um markante Zielpunkte wie beispielsweise Kantenendpunkte, 2-Achsenkreuzpunkte oder 3-Achsenkreuzpunkte oder dergleichen als Anzahl von Bildpunkte auszuwählen. Anders ausgedrückt lassen sich Bildpunkte mittels des Messgeräts in vorteilhafter Weise derart vorgeben, dass damit markante Zielpunkte am Zielobjekt als Bildpunkte im fotoelektrischen Bild definierbar sind.

Dies kann zum einen durch eine Auswahl des Anwenders geschehen, beispielsweise über ein Bedienfeld. Dies kann auch automatisch geschehen, z. B. mittels der Bildverarbeitungseinheit, etwa basierend auf Kontrastanalysen, Hough-Transformation oder dergleichen Bildfilter. Vorzugsweise lässt sich das Messgerät mit einem Koppelmodul erweitern, das in geeigneter Weise zusätzliche Applikationen wie Planspeicher, ein GPS-System oder andere verfügbare Abstandsinformationsträger ankoppeln lässt. Dies eignet sich in besonders vorteilhafter Weise, um die vom Abstandsmodul angebbaren Abstandsmaße mit anderen Abstandsinformationen abzugleichen. Vorteilhaft ist das Koppelmodul ausgebildet, einen Abstand des Abstandsmoduls einem Abstand eines Abstandsinformationsträgers zuzuordnen. Dies kann beispielsweise vorteilhaft dazu genutzt werden, um Pläne, Orte oder Orientierungen des Zielobjekts oder Messgeräts im Hinblick auf Vorgaben festzulegen und mit diesen zu identifizieren. Dies kann in vorteilhafter Weise für BIM-Anwendungen (Building Information Modelling) genutzt werden.

Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Fig.1: eine schematische Ansicht eines Messgeräts in Form eines Handgeräts zur berührungslosen Distanzmessung in einer Frontansicht (A) und Seitenansicht (B);

Fig. 2A, Fig. 2B: zwei besonders bevorzugte Varianten des Messgeräts der Fig. 1 mit variierter Distanzmesseinrichtung - in Fig. 2A mit biaxialer Strahlführung und in Fig. 2B mit koaxialer Strahlführung;

Fig. 3A, Fig. 3B: eine illustrative Darstellung der Einflüsse einer Geräteverdrehung (A) auf eine Distanzmessung und deren Grenzen zur Messung eines bislang nur indirekt bestimmbaren lateralen Abstands auf einer Oberfläche des Zielobjekts;

Fig. 4A, Fig.4B: zwei besonders bevorzugte Varianten des Messgeräts der Fig. 1 mit variierter relativer Anordnung von Distanzmesseinrichtung und Bildverarbeitungseinheit - in Fig. 4A mit biaxialer Strahlführung und in Fig. 4B mit koaxialer Strahlführung;

Fig. 5: eine schematische Darstellung zur Systematik einer Distanzmessung in Kombination mit einer fotoelektrischen Bilderfassung zur Bestimmung von lateralen Abständen in einer Oberfläche eines Zielobjekts unter Verwendung einer Fokuslänge und einer Pixelgröße als Referenzmaße zur zumindest näherungsweisen Bestimmung eines Bildmaßstabs, um einen Bildumrechnungsfaktor angeben zu können;

Fig. 6: der Aufbau einer Steuer- und Recheneinheit mit einem Verfahrensablauf zur Realisierung in einem Abstandsmodul der Steuer- und Recheneinheit unter Zuordnung eines Abstandsmaßes zu einem Pixelabstand zweier Bildpunkte eines fotoelektrischen Bildes der fotoelektrischen Bilderfassung;

Fig. 7: der weiterbildende modulare Aufbau einer Steuer- und Recheneinheit mit dem Abstandmodul unter Zugrundelegung des Verfahrensablaufs der Fig. 6;

Fig. 8: eine erste bevorzugte Anwendung des Messgeräts zur Ermittlung von markanten Abständen in einer im Wesentlichen lateralen Ebene eines Zielobjekts, vorliegend in Form einer Häuserwand, wobei die laterale Ebene im Wesentlichen parallel zur Bildebene des fotoelektrischen Bildes der Kameraoptik ist;

Fig. 9: eine beispielhaft dargestellte Wirkung einer affinen Transformation, die mit einem Transformationsmodul der Fig. 7 bei der Steuer- und Recheneinheit durchführbar ist;

Fig. 10: eine erste bevorzugte Darstellungsmöglichkeit des fotoelektrischen Bildes auf einer elektronischen Anzeigeeinrichtung unter zusätzlicher Angabe von für den Anwender direkt ersichtlichen Abstandsmaßen von markanten Längen zusammen mit einer vorteilhaften Touch-Screen-Bedieneroption zur Anzeige eines Flächenmaßes;

Fig. 11:     eine zweite bevorzugte Darstellungsmöglichkeit eines fotoelektrischen Bildes zusammen mit einem Abstandsmaß auf einer fotoelektrischen Anzeigeeinrichtung.

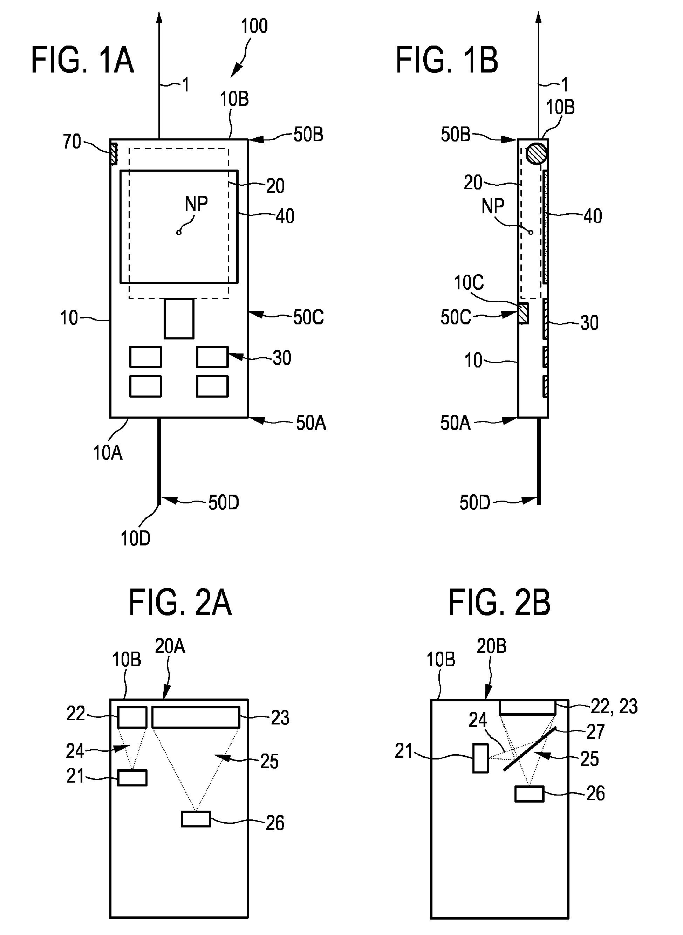

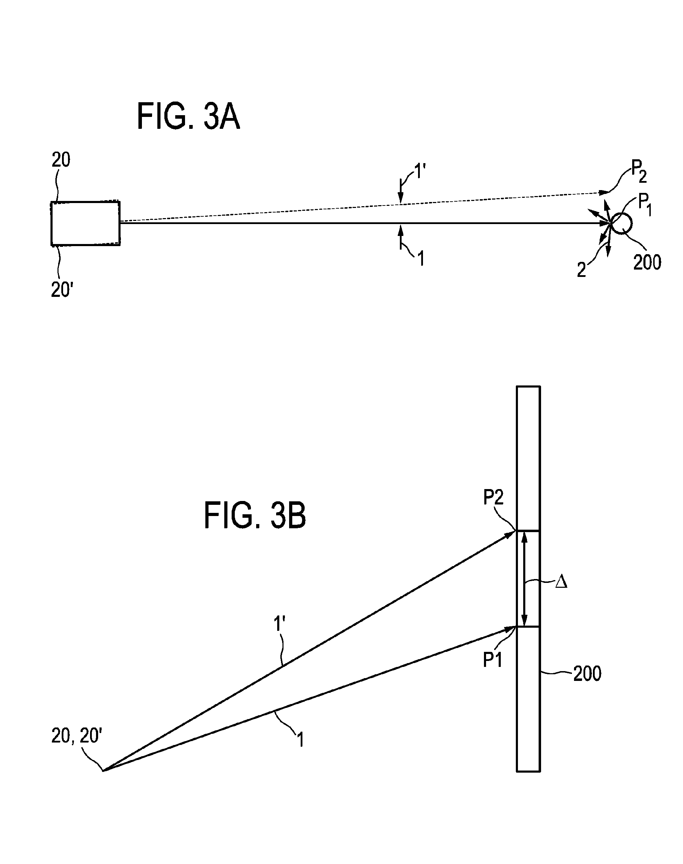

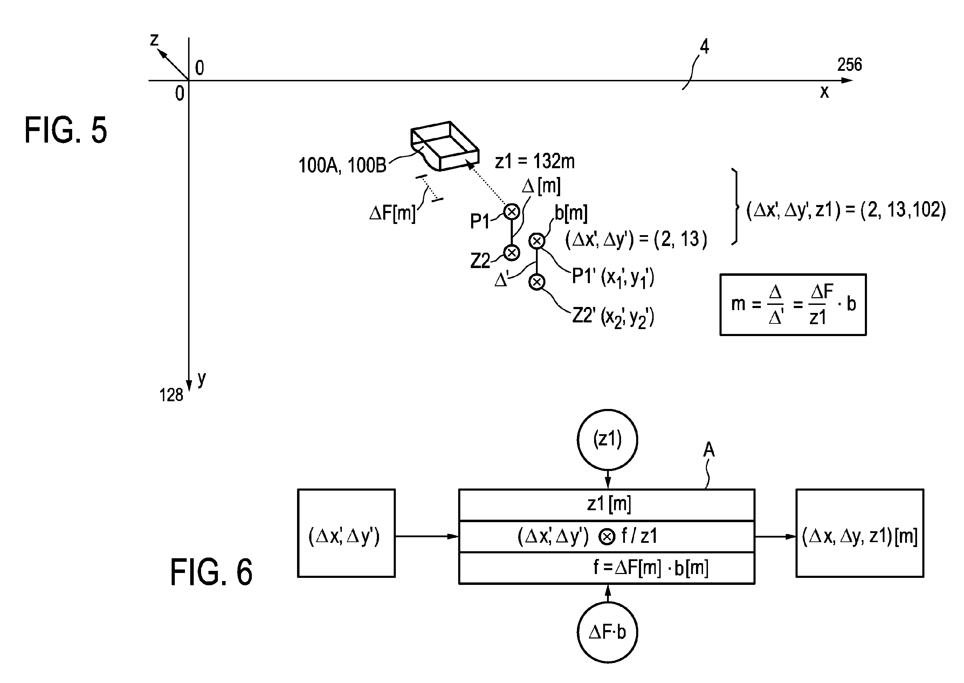

Fig. 1A und Fig.1B zeigen ein Messgerät 100 in Form eines Handgeräts für eine berührungslose Messung einer in Fig. 5 näher bezeichneten Distanz z zu einem z.B. in Fig. 3A und Fig. 3B beispielhaft gezeigten Zielobjekt 200. Das Messgerät 100 ist in Fig. 1A in einer Aufsicht auf eine Bedienerseite des Gehäuses 10 gezeigt und in Fig. 1B in einer Seitenansicht des Gehäuses 10 gezeigt - die Bestandteile des Messgeräts 100 sind schematisch dargestellt.

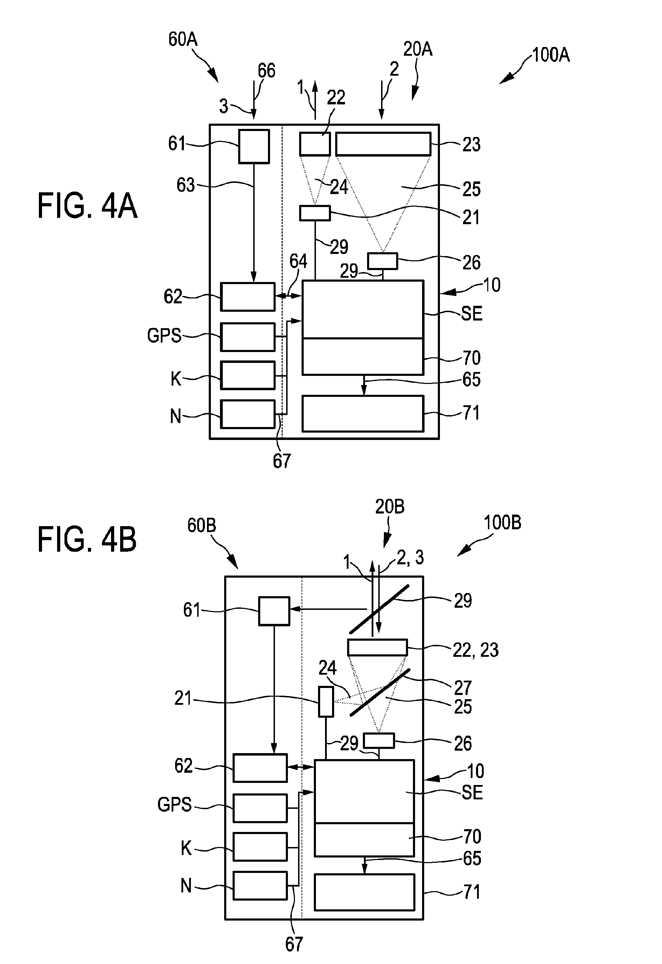

Das Gehäuse 10 des beispielsweise in Form eines Laserdistanzmessgeräts gebildete Messgeräts 100 ist zur händischen Benutzung ausgebildet - vorliegend also nicht unwesentlich größer als die Fläche einer Hand mit einer entsprechenden Haptik, ggf. auch Ergonomie; gleichwohl ist das Gehäuse 10 der Einfachheit halber rechteckig dargestellt. Im Gehäuse 10 ist optische Messstrahlung 1 nutzende Distanzmesseinrichtung 20 in Form einer Laserdistanzmesseinheit untergebracht. Mögliche Varianten der Distanzmesseinrichtung 20 sind in Fig. 2A und Fig. 2B dargestellt, die als bevorzugte Ausführungsformen gemäß Fig.4A und Fig. 4B weitergebildet sind. Unterschiedliche Handhabungssituationen zur berührungslosen Messung einer Distanz z zu einem Zielobjekt sind in Fig. 3A und Fig. 3B näher dargestellt.

Das Messgerät 100 weist eine am Gehäuse 10 angeordnete Bedien- und Eingabeanordnung 30 auf, die vorliegend als eine in die Bedienseite des Gehäuses 10 eingelassene Tastatur gebildet ist. Auf der Bedienseite des Gehäuses 10 ist eine Sichtanzeige 40 eingelassen, auf der vorliegend sowohl die gemessene Distanz z zwischen dem Distanzmessgerät 100 und einem Zielobjekt 200 als auch der Bedienzustand des Distanzmessgeräts 100 anzeigbar ist. Über die Bedien- und Eingabeanordnung 30 lässt sich die Distanzmesseinrichtung 20 bedienen. So lässt sich z.B. einer der im Folgenden erläuterten Referenzanschläge 50A, 50B, 50C oder 50D des Gehäuses 10 auswählen. Während sich nämlich die Messung über die optische Messstrahlung 1 - hier beispielsweise ein Laserstrahl - auf einen gehäuseinternen Referenzpunkt NP bezieht, wird ein Nutzer regelmäßig die Distanz zum Zielobjekt 200 in Bezug auf einen der Referenzanschläge 50A, 50B, 50C oder 50D messen wollen. Durch Auswahl des Referenzanschlags von einem Nutzer, beispielsweise über die Bedien- und Eingabeanordnung 30, kann die Distanz z unter Verwendung fixer Additionskonstanten auf verschiedene Referenzanschläge bezogen werden. Der wichtigste Referenzanschlag 50A ist an der hinteren Geräteseite 10A angebracht. Zudem gibt es noch andere Referenzanschläge 50B, 50C, 50D, z.B. an der vorderen Geräteseite 10B oder an einer Spitze 10D einer Messverlängerung oder an einer Befestigung 10C für ein Stativgewinde, dessen Mittelpunkt ebenfalls als Referenzanschlag 50C dienen kann.

Im Folgenden sind für identische oder ähnliche Teile oder Teile identischer oder ähnlicher Funktion der Einfachheit halber gleiche Bezugszeichen verwendet. Fig. 4A und Fig. 4B zeigen weitergebildete Ausführungsformen gemäß einer ersten und zweiten Variante einer Distanzmesseinrichtung 20A und 20B, die in einem Messgerät 100 als Distanzmesseinrichtung 20 gemäß dem Konzept der Erfindung verwendet werden können. Dazu wird zunächst auf die Fig.2A und die Fig.2B Bezug genommen.

Zur Bestimmung einer Distanz zwischen einem Zielobjekt 200 und dem Referenzpunkt NP des Messgeräts 100 können eingangs erläuterte Verfahren zur Anwendung kommen. Vorliegend weist das Distanzmessgerät 100 eine optische Messstrahlung 1 nutzende Distanzmesseinrichtung 20 auf, die auf einer Laufzeitmessung basiert. Zwei Varianten der Distanzmesseinrichtung 20A, 20B, wie sie für eine Distanzmesseinrichtung 20 als Distanzmesseinrichtung verwendet werden können, sind beispielhaft in Fig. 2A und Fig. 2B gezeigt. Beide Distanzmesseinrichtungen 20A, 20B weisen eine Lasereinheit 21, z.B. eine Laserdiode sowie eine Sendeoptik 22 und eine Empfangsoptik 23 auf. Die Distanzmesseinrichtung 20A, 20B weist auch einen eine optische Achse aufweisenden optischen Sendepfad 24 zur Aussendung von Messstrahlung 1, hier ein Laserstrahl, auf das Zielobjekt 200 auf. Außerdem weist die Distanzmesseinrichtung 20A, 20B einen eine optische Achse aufweisenden optischen Empfangspfad 25 zum Empfang von vom Zielobjekt 200 reflektierter bzw. zurückgestreuter Messstrahlung 2 auf. Im Empfangspfad 25 ist ein Detektor 26, z.B. eine Fotodiode, zur Detektion der reflektierten und/oder zurückgestreuten Messstrahlung 2 angeordnet. Die Empfangsoptik 23 dient in beiden Fällen der Distanzmesseinrichtung 20A, 20B zur Fokussierung der reflektierten und/oder zurückgestreuten Messstrahlung 2 auf den Detektor 26. Die Distanzmesseinrichtung 20A ist mit einer separaten Sendeoptik 22 und Empfangsoptik 23 ausgebildet, sodass der Sendepfad 24 und der Empfangspfad 25 nicht überlappen. Diese Anordnung der Pfade in der Distanzmesseinrichtung 20A wird auch als biaxial bezeichnet. Im Unterschied dazu ist die Distanzmesseinrichtung 20B mit einer koaxialen Anordnung der Pfade ausgebildet, wobei der Sendepfad 24 und der Empfangspfad 25 über einen Strahlteiler 27 zusammengebracht sind und in der beiden gemeinsamen Sende- und Empfangsoptik 22, 23 überlappen. Jeweils im Bereich zwischen Lasereinheit 21 und Strahlteiler 27 bzw. zwischen Detektor 26 und Strahlteiler 27 sind Sendepfad 24 und Empfangspfad 25 separat geführt.

Konkret wird - wie weiter aus Fig. 3A ersichtlich - bei einer solchen oder ähnlichen als Laserdistanzmesseinheit ausgebildeten Distanzmesseinrichtung 20 Messstrahlung 1 einer Lasereinheit 21 in Form einer Laserdiode mit einer optischen Linse der Sendeoptik 22 gebündelt. Die gebündelte Messstrahlung 1 wird ausgehend von der vorderen Gehäuseseite 10B auf das Zielobjekt 200 - beispielsweise dort einen Messpunkt P1 - gerichtet und bildet am Messpunkt P1 einen Lichtfleck. Die als Streulicht zu bezeichnende reflektierte bzw. zurückgestreute Messstrahlung 2 dieses Lichtflecks wird mit einer optischen Linse der Empfangsoptik 23 in der erläuterten Weise auf die aktive Fläche einer Fotodiode des Detektors 26 abgebildet. Die Distanzmesseinrichtung 20 kann dabei biaxial oder koaxial ausgeführt sein. Zur Bestimmung der Entfernung des Zielobjekts 200 zum Referenzpunkt NP des Messgeräts 100 - entsprechend dem Hin- und Rückweg - wird das Laserlicht des Laserstrahls als Messstrahlung 1, moduliert. Eine Modulation kann impulsförmig oder auch sinusförmig erfolgen. Auch andere Modulationsformen sind möglich. Die Modulation erfolgt derart, dass die Zeitdifferenz zwischen einer ausgesendeten und empfangenen Messstrahlmodulation messbar ist. Über den Faktor der Lichtgeschwindigkeit kann also auf die einfache Entfernung zwischen dem Referenznullpunkt NP des Messgeräts 100 und dem Zielobjekt 200 geschlossen werden. Diese kann z.B. in einer nicht gezeigten Steuereinrichtung berechnet werden.

Fig. 3B zeigt eine bei üblichen Distanzmessungen problematische Situation. Zwar kann mittels der Messstrahlung 1 ähnlich der in Fig. 3A dargestellten Ausrichtung der Distanzmesseinrichtung 20 eine Distanz zum Messpunkt P1 des Zielobjekts 200 bestimmt werden und ebenso auch eine Distanz über die Messstrahlung 1' zu einem Zielpunkt P2 des Zielobjekts 200. Allerdings ist der Abstand Δ zwischen Messpunkt P1 und Messpunkt P2 nur indirekt unter Verwendung der mit Messstrahlung 1 und Messstrahlung 1' gewonnenen zwei Messdistanzen in Verbindung mit dem Winkel zwischen den beiden Messstrecken auf rechnerischem Wege möglich. Das heißt der Abstand Δ in der lateralen Ebene an der Oberfläche des Zielobjekts 200 ist mit einfacher Verdrehung der Distanzmesseinrichtung 20 üblicherweise nicht direkt bestimmbar. Außerdem ist es selbst für eine indirekte Bestimmung des Abstands Δ erforderlich wenigstens zwei separate Messungen -nämlich einmal die mit Messstrahlung 1 zum Messpunkt P1 und zum Anderen die mit Messstrahlung 1 zum Messpunkt P2- durchzuführen. Diese Situation tritt bei alltäglicher Verwendung einer Distanzmesseinrichtung 20 vergleichsweise häufig auf. Insbesondere betrifft dies die Vermessung einer lateralen Oberfläche eines Zielobjekts 200 mit darin befindlichen Längen und Flächen. Beispielsweise betrifft dies markante Längen und Flächen, die durch markante Zielpunkte, beispielsweise an Fensteröffnungen, Türöffnungen oder dergleichen an Gebäudefassaden vorgegeben sind. Derzeit lassen sich solche indirekte Masse nur mit sehr aufwendigen eingangs erläuterten Fotogrammmetrie-Apparaturen oder mit einer kombinierten Messung zweier Distanzen und eines Winkels oder mit einer kombinierten Messung zweier Distanzen und der Distanz einer horizontalen Strecke in Verbindung mit dem Satz des Pythagoras vermessen.

Fig. 4A und Fig. 4B zeigen gemäß dem Konzept der Erfindung weitergebildete Ausführungsformen einer ersten Variante einer Distanzmesseinrichtung 20A und einer zweiten Variante einer Distanzmesseinrichtung 20B. In beiden Fällen ist zusätzlich zu den bereits in Fig. 2A und Fig. 2B beschriebenen Distanzmesseinrichtungen eine ebenfalls im Gehäuse 10 des Messgeräts 100 angeordnete fotoelektrische Bilderfassung 60A, 60B vorgesehen. Jede der fotoelektrischen Bilderfassungen 60A, 60B weist eine Sucher- und Kameraoptik 61 sowie einen diese verbindenden nicht näher bezeichneten Bildpfad 66 zur Erfassung von Zielpunkten eines Zielobjektes 200 auf. Ein Zielpunkt kann z.B. durch den obengenannten Messpunkt oder -wie regelmäßig eher der Fall- die obengenannten markanten Punkte einer Gebäudefassade definiert sein. Ein Zielpunkt wird im folgenden mit Z1, Z2 im Unterschied zu einem Messpunkt P1, P2 bezeichnet. Diese können identisch sein, werden es im Regelfall aber nicht sein. Die Kameraoptik ist beispielsweise in Form eines CCD-Arrays oder dergleichen Kamerasensor, z.B. CMOS-Sensor, gebildet, dem eine geeignete optische Anordnung als Sucheroptik aufgesetzt ist. Die Bildverarbeitungseinheit 62 kann in Form eines geeigneten Bildprozessors gebildet sein, mit dem unter Aufbereitung der vom Kamerasensor gelieferten Bilddaten ein z.B. in Fig. 5 näher erläutertes fotoelektrisches Bild 4 des Zielobjektes 200 erstellbar ist.

Die Messgeräte 100A, 100B unterscheiden sich im Bereich der Pfade und Ausgangsoptiken, die je nach Bedarf mit tendenziell unterschiedlichen Vorteilen realisiert sein können. Die fotoelektrische Bilderfassung 60A bzw. 60B ist relativ zur Distanzmesseinrichtung 20A bzw. 20B unterschiedlich angeordnet. Beim Messgerät 100A der Fig. 4A ist die fotoelektrische Bilderfassung 60A und der Bildpfad 66 mit einer separaten Sucher- und Kameraoptik 61 gebildet. Insbesondere ist der Bildpfad 66 biaxial zum Sendepfad 24 und biaxial zum Empfangspfad 25 ausgeführt. Alle Pfade 66, 24, 25 sind biaxial und mit separater Optik 61, 22, 23 im Gehäuse 10 des Messgeräts 100A angeordnet.

Beim Messgerät 100B der Fig. 4B ist der Bildpfad 66 und der Sendepfad 24 und der Empfangspfad 25 über einen von der Messstrahlung als auch dem Fotolicht gemeinsam genutzten Strahlteiler 29 zusammengeführt. Sowohl das Fotolicht 3 als auch die Messstrahlung 1 und die reflektierte bzw. zurückgestreute Messstrahlung 2 ist also über ein gemeinsames Ausgangselement in Form des weiteren Strahlteilers 29 und gegebenenfalls einer weiteren nicht dargestellten Auskoppeloptik, wie einem Auskoppel-Fenster, -Linse oder dergleichen geführt. Diese koaxiale Anordnung aller Pfade 66, 24, 25 vermeidet vorteilhaft Parallaxefehler zwischen Fotolicht zur Aufnahme des fotoelektrischen Bildes 4 sowie der Messstrahlung 1, 2 zur Messung der Distanz; verbessert also die Messgenauigkeit und reduziert die Anzahl der erforderlichen Ausgangselemente oder anderer Optikelemente.

Zur weiteren Verarbeitung des fotoelektrischen Bildes 4 ist die Kameraoptik 61 mit der Bildverarbeitungseinheit 62 über eine geeignete Bilddatenleitung 63 verbunden. Die Bildverarbeitungseinheit 62 ist mit der Steuer- und Recheneinheit SE über eine weitere Bilddatenleitung 64 verbunden. Der Steuer- und Recheneinheit SE liegen so Informationen über das fotoelektrische Bild 4 der fotoelektrischen Bilderfassung 60A, 60B vor. Ebenso liegen über die Detektor-Signalleitung 29 der Steuer- und Recheneinheit SE Detektorsignale vor, welche einen Rechenwert für die Distanz z1 des Messpunkts P1 am Zielobjekt 200 in der Steuer- und Recheneinheit SE verfügbar machen. Mittels der Steuer- und Recheneinheit SE können so Informationen über ein von der Bildverarbeitungseinheit aufgearbeitetes fotoelektrisches Bild 4 und auch ein Distanzmaß einer Distanz z1 zwischen dem Messpunkt P1 und dem Referenzpunkt NP zur Weiterverarbeitung und/oder für den Nutzer verfügbar gemacht werden.

Wie aus Fig. 5 symbolisch ersichtlich ist ein Abbild des Messpunkts P1 -nämlich das Messpunkt-Bild P1' des gegenständlichen Messpunkts P1- Teil des fotoelektrischen Bildes 4. Vorliegend ist genau ein einziges fotoelektrisches Bild 4 aus einer einzigen Aufnahme des Zielobjekts 200 vorgesehen und diesem einzigen fotoelektrischen Bild 4 ist genau ein einziger Messpunkt P1 zugeordnet. Vorliegend - wie regelmäßig der Fall - ist der Messpunkt P1 vom Bildumfang erfasst und im Bild 4 als Messpunkt-Bild P1' ersichtlich. Der Messpunkt P1 dient vorliegend der Einfachheit halber auch als Zielpunkt Z1 -ersichtlich als Messpunkt-Bild P1'- sodass das Zielpunkt-Bild Z1' in Fig. 5 mit den Pixel koordinaten x1', y1' bezeichnet ist. Anders ausgedrückt ist das Abbild des Orts des Messpunkts P1 Teil des fotoelektrischen Bildes 4 und vorliegend auch Zielpunkt, also z.B. eine markante Position wie eine Fensterecke od.dgl. an einer Gehäusefassade od.dgl..

In einer hier nicht dargestellten Situation muss der Messpunkt P1 jedoch nicht notwendigerweise Teil des Bildumfanges sein. Es ist ausreichend, wenn mittels des Messpunkts P1 und der Distanz z1 des Messpunkts P1 vom Referenzpunkt NP eine Ebene als Referenzebene definierbar ist. Die Zielpunkte Z1, Z2 können jedenfalls näherungsweise der Referenzebene zugeordnet werden, bzw. die Zielpunkte Z1, Z2 liegen vorteilhafterweise in der Referenzebene. Insbesondere wird der Messpunkt P1 regelmäßig keinen Zielpunkt Z1 darstellen, d.h. keinen Endpunkt eines zu messenden lateralen Abstands $\Delta$ darstellen. Ein Messpunkt P1 wird regelmäßig vor allem keine markante Position bezeichnen, da der Anwender ggfs. den Messpunkt durch Ausrichten des Messgerätes auf irgendeinen freien Punkt einer Fläche, z.B. einer Gehäusefassade definieren wird. Möchte man z.B. eine Fensterbreite messen, so befindet sich der Messpunkt P1 irgendwo z.B. auf einer Wand als Referenzebene. Der Messpunkt P1 ist relevant für die Messung der Distanz z1 vom Gerät 100A, 100B zur Wand als Referenzebene. Er gehört aber im Unterschied zu Fig. 5 üblicherweise aber nicht zu der Anzahl von Zielpunkten Z1, Z2, die z.B. durch Eckpunkte definiert sind. Um eine möglichst genaue laterale Messung zu erlauben sollte der Messlaserstrahl senkrecht auf der Referenzebene stehen und die durch Zielpunkte Z1, Z2 definierten lateralen Messobjekte sich vorteilhaft in der Referenzebene befinden.

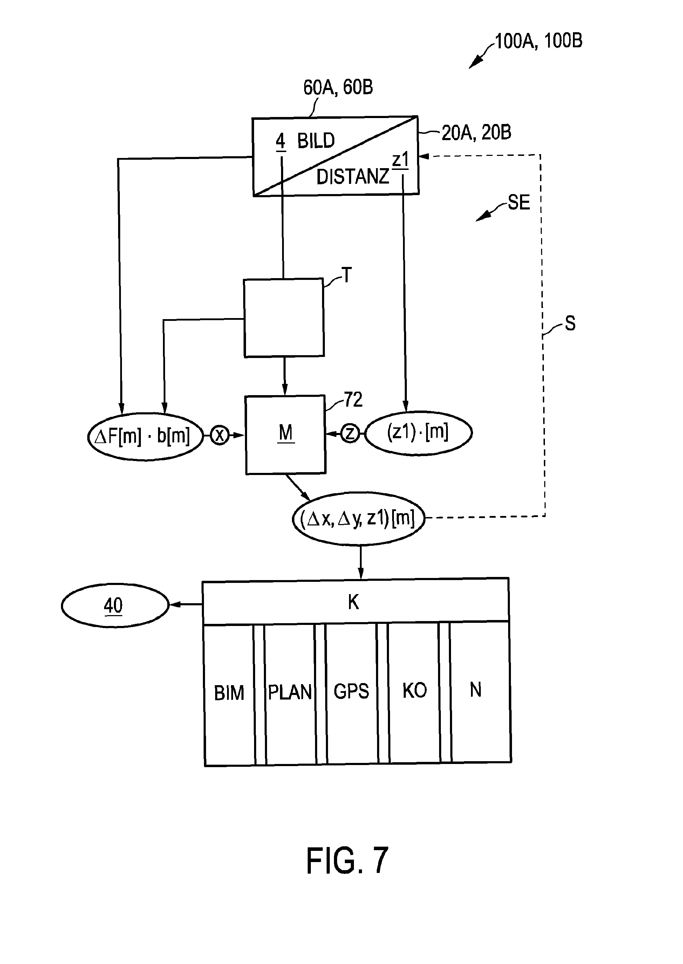

Falls letzteres nicht der Fall sein sollte, kann durch eine perspektivische Entzerrung eine Verbesserung erzielt werden. Dazu kann ein in Fig. 7 dargestelltes Transformationsmodul dienen, das in der Steuer- und Recheneinheit SE und/oder in der Bildverarbeitungseinheit 62 gebildet sein kann.

Eine Aufnahme des Zielobjekts 200 im Bereich des Messpunkts P1 ist mit einer in Fig. 4A und Fig. 4B gezeigten vergleichsweise einfach ausgebildeten, einzigen Sucher- und Kameraoptik 61 möglich. Die vergleichsweise einfache Ausführung ist ausreichend zur Realisierung des erfindungsgemäßen Konzepts. Weder muss die Sucher- oder Kameraoptik schwenkbar sein, noch muss sie mehrfach ausgeführt sein. Zusammenfassend sind die Messgeräte 100A, 100B vorteilhaft einfach mit einer Distanzmesseinrichtung 20A bzw. 20B sowie mit einer fotoelektrischen Bilderfassung 60A bzw. 60B ausgeführt, wobei zusätzlich eine Steuer- und Recheneinheit SE vorgesehen ist, der sowohl ein Distanzmaß der Distanz z1 zwischen Referenzpunkt NP und Messpunkt P1 vorliegt, als auch eine Definition einer Anzahl von Bildpunkten des fotoelektrischen Bildes.

Dem Konzept der Erfindung folgend liegen diese Informationen zugeordnet in gegenseitig auf einander verweisenden Form vor, d.h. ein dem Messpunkt P1 entsprechend definiertes Messpunkt-Bild P1'(x1',y1') ist der in Fig.5 so bezeichneten Distanz z1 zugeordnet. P1 bezeichnet den gegenständlichen Messpunkt und P1' das abgebildete Messpunkt-Bild im fotoelektrischen Bild 4 der Kamera. Im folgenden beziehen sich alle gestrichenen Größen auf Bildgrößen ohne Einheit und alle nicht gestrichenen Größen beziehen sich auf Gegenstandsgrößen , z.B. mit der Einheit Meter [m]. So ist vorliegend die Distanz z1 des Referenzpunktes NP zum Messpunkt P1 zugeordnet zum Messpunkt-Bild P1'. Beispielsweise kann die Zuordnung als Zahlentripel (x1', y1', z1) verfügbar sein. Das Zahlentripel umfasst vorliegend in den ersten beiden Stellen die den Messpunkt P1' als Pixel im fotoelektrischen Bild definierenden Pixelkoordinaten (x1', y1') und in der weiteren dritten Stelle die Distanz z1 des Messpunktes P1 als Distanzmaß. Ein solches Zahlentripel (x1', y1', z1) kann von der Steuer- und Recheneinheit SE beispielsweise im Speicher 70 abgelegt werden und gegebenenfalls über eine weitere Datenleitung 65 einer Schnittstelle 71 zugeführt werden. Über die Schnittstelle 71 können beispielsweise weitere Anzeige- oder Auswertegeräte an das Messgerät 100A, 100B angeschlossen werden.

Fig. 5 veranschaulicht im Einzelnen das Prinzip, gemäß dem die Steuer- und Recheneinheit SE mittels einem als Software oder Hardware implementierten Abstandsmodul einen dem Messpunkt P1 entsprechenden, definierten Bildpunkt P1' mit der Distanz z1 des Referenzpunkts NP zum Messpunkt P1 nach dem oben genannten Prinzip zugeordnet.

Darauf aufbauend nutzt ein in Fig.6 dargestelltes Abstandsmodul A einen Abstand zwischen einem ersten Bildpunkt und einem zweiten Bildpunkt als Pixelabstand und ordnet diesem unter Verwendung eines Referenzmaßes f ein Abstandsmaß -hier in [m]- zu.

Im Einzelnen zeigt Fig. 5 dazu die Pixelkoordinatenebene eines fotoelektrischen Bildes 4 wie es von der Bildverarbeitungseinheit der Steuer- und Recheneinheit SE zur Verfügung gestellt wird. Die Pixelkoordinatenebene gibt insofern die Referenzebene vor, die durch die Distanz z1 des Messpunkts vom Referenzpunkt NP und der Blickrichtung der Bilderfassung bzw. der Richtung des Messlaserstrahls gebildet wird; z.B. in Zuordnung zu einer Gebäudewand od.dgl.. Beispielhaft sind in der Pixelkoordinatenebene mit x'-Richtung und y'-Richtung die Pixel in der x'-Richtung bis 256 nummeriert und die Pixel in der y'-Richtung bis 128 nummeriert - in einer tatsächlichen Anwendung liegt die Pixelzahl erheblich darüber. In der Pixelebene ist genau ein fotoelektrisches Bild 4 definiert, das aus einer einzigen Aufnahme des Zielobjekts 200 mit dem Messgerät 100A, 100B resultiert. Das Zielobjekt weist den Messpunkt P1 und lateral im Abstand $\Delta$[m] dazu in der zugeordneten Referenzebene den Zielpunkt Z2 auf. Der laterale Abstand $\Delta$[m] soll bestimmt werden. Der Messpunkt P1 dient vorliegend wie oben erläutert der Einfachheit halber als Zielpunkt Z1.

In dem fotoelektrischen Bild 4 ist der in einer lateralen Oberfläche des Zielobjekts 200 -der Referenzebene-ersichtliche Messpunkt P1 -hier beispielhaft als erster Zielpunkt Z1- mit abgebildet. Der Messpunkt P1 weist als Messpunkt-Bild P1' (x1', y1') die Pixelkoordinaten x1', y1' auf. Das fotoelektrische Bild 4 ist das Ergebnis einer einzigen Aufnahme der fotoelektrischen Bilderfassung 60A, 60B. Zur Bestimmung eines Abstandsmaßes des Abstands $\Delta$[m] zwischen dem Messpunkt P1/ ersten Zielpunkt Z1 und einem zweiten Zielpunkt Z2; letzterer ist als zweites Zielpunkt-Bild Z2' (x2', y2') im fotoelektrischen Bild 4 mit den Pixelkoordinaten x2', y2' abgebildet. Im Rahmen der vorliegenden Ausführungsform ist zunächst keine weitere Aufnahme eines fotoelektrischen Bildes erforderlich. Vielmehr ist zunächst die Bildverarbeitungseinheit 62 ausgebildet, wenigstens das Messpunkt-Bild P1' und das Zielpunkt-Bild Z2' in dem fotoelektrischen Bild 4 über die Pixelkoordinaten x1', y1' und x2', y2' zu definieren und einen Abstand zwischen diesen Bildpunkten -nämlich zwischen dem Messpunkt-Bild P1' (x1', y1') und Zielpunkt-Bild Z2' (x2', y2')- als Pixelabstand $\Delta$' zu definieren; dies erfolgt beispielsweise über die Pixelkoordinatendifferenzen $\Delta 1x' = x2' - x1'$, $\Delta 1y' = y2' - y1'$. Vorliegend ist der Pixelabstand $\Delta$', beliebig gewählt, beispielhaft mit Pixelkoordinatendifferenzen $(\Delta x', \Delta y') = (2, 13)$ angegeben. Einem solchen Pixelabstand $\Delta$' kann durch das in Fig. 6 gezeigte Abstandsmodul A der Steuer- und Recheneinheit SE ein Abstandsmaß $\Delta$ zugeordnet werden. Die Distanz ist vorliegend beliebig beispielhaft mit einem Wert 132 in Meter [m] angegeben.

Vorliegend wird -ein entsprechender Aufbau des Abstandsmoduls ist in Fig. 6 gezeigt- eine Fokuslänge $\Delta F$, die Distanz z1 der lateralen Referenzebene und die Pixelgröße bx und by in x- und in y-Richtung jeweils in der Einheit Meter [m] verwendet, um aus den Pixelkoordinatendifferenzen $\Delta x'$ und $\Delta y'$ den Abstand $\Delta$ der Zielpunkte Z1 (hier Messpunkt P1) und Z2 in der Einheit [m] zu ermitteln. Beispielhaft wird vorliegend eine vergleichsweise einfache Rechenvorschrift basierend auf der geometrischen Optik genutzt. Demnach folgt für Distanzen z1, die bedeutend grösser sind als die Fokuslänge $\Delta F$:

$$\frac{\Delta F}{z_1} \approx \frac{\Delta}{\sqrt{\left(b_x \cdot \Delta x'\right)^2 + \left(b_y \cdot \Delta y'\right)^2}} \ .$$

Daraus folgt für den Abstand $\Delta$ der Zielpunkte Z1 (hier Messpunkt P1) und Z2 näherungsweise:

$$\Delta = \sqrt{\left(\Delta x\right)^2 + \left(\Delta y\right)^2} \approx \frac{\Delta F}{z_1} \cdot \sqrt{\left(b_x \cdot \Delta x'\right)^2 + \left(b_y \cdot \Delta y'\right)^2}$$

Für gleiche Pixelgrößen bx = by = b vereinfacht sich der Abstand $\Delta$ der Zielpunkte zu

$$\Delta = \sqrt{\left(\Delta x\right)^2 + \left(\Delta y\right)^2} \approx \frac{\Delta F \cdot b}{z_1} \sqrt{\left(\Delta x'\right)^2 + \left(\Delta y'\right)^2} = \frac{\Delta F \cdot b}{z_1} \Delta' \ .$$

In verkürzter Form ist diese Vorschrift in Fig. 5 gezeigt. Im Ergebnis lassen sich über das Abstandsmodul A der Fig. 6 alle Stellen des Zahlentripels $(\Delta x, \Delta y, z1)$ vollständig in der Einheit Meter [m] angeben und im Speicher 70 und/oder der Schnittstelle 71 des Messgeräts 100A, 100B zur Verfügung stellen. Dazu weist das Abstandmodul A einen Eingang für ein Referenzmaß f auf, das vorliegend als Produkt aus Fokuslänge ΔF und isotroper Pixelgröße bx = by = b gebildet ist. Das Abstandmodul A weist auch einen Eingang für die Distanz z1 auf . Ein Bildmaßstab M wird dann als Verhältnis aus einer Fokuslänge (ΔF[m]) und einer Distanz (z[m]) multipliziert mit einer Pixelgröße (b[m]) bestimmt. Der Bildmaßstab M wird mit dem Pixelabstand Δ' multipliziert und ergibt so den lateralen Abstand Δ.

Durch diese eindeutige Zuordnung des Messpunkts P1 in der lateralen Ebene des Zielobjekts 200 zu einem Messpunkt-Bild P1' (x1', y1') in dem fotoelektrischen Bild 4 kann also die gemessene Distanz z1 zum Messpunkt P1, insbesondere zusammen mit der Fokuslänge ΔF der Sucher- und Kameraoptik 61, genutzt werden, um einen Bildumrechnungsfaktor als Bildmaßstab M = Δ / Δ' = (ΔF / z1 . b) für das fotoelektrische Bild 4 jedenfalls näherungsweise zu ermitteln. So kann das fotoelektrische Bild 4 quantitativ in Relation zur tatsächlichen lateralen Ebene des Zielobjekts 200 gesetzt werden. Objekte -wie z.B. eine durch die Pixelkoordinatendifferenz (Δx', Δy') zwischen P1' (x1', y1') und Z2' (x2', y2') definierte Kante- können so zumindest näherungsweise vermessen werden.

Bei einer solchen Messung ist ein Messfehler dann am geringsten, wenn die Objekte in einer Ebene liegen, in welcher auch der Messpunkt P1 liegt, die möglichst senkrecht zur Blickrichtung der fotoelektrischen Bilderfassung (Referenznormale) ausgerichtet ist. Insofern ist ein Messfehler genau dann besonders gering, wenn die zuvor genannte laterale Ebene auf der lateralen Oberfläche des Zielobjekts 200 jedenfalls annäherungsweise senkrecht zum Messstrahl 1 steht. Grundsätzlich kann in einem späteren Verfahrensschritt -etwa durch Wiederholen des in Fig. 5 und Fig. 6 dargestellten Vorgangs- ein oder mehrere fotoelektrische Bilder des gleichen Zielobjektes 200 oder andere mit dem Bild 4 zusammenhängende oder überlappende Ansichten des Zielobjektes 200 aufgenommen werden. So kann ein Panoramabild aus mehreren fotoelektrischen Bildern rechnerisch zusammengesetzt werden. Für den Fall enthält ein Panoramabild mehrere fotoelektrische Bilder oder Teile derselben, die jeweils einem anderen Messpunkt P1, P2, ... , $P_N$ zugeordnet sind, da sie sich aus den Einzelmessungen und Einzelaufnahmen ergeben. Dies kann vorteilhaft sein, da die laterale Messung genauer und zuverlässiger wird. Auch grosse Zielobjekte, die nicht mit einer Einzelaufnahme erfassbar sind, lassen sich so mit vermessen.

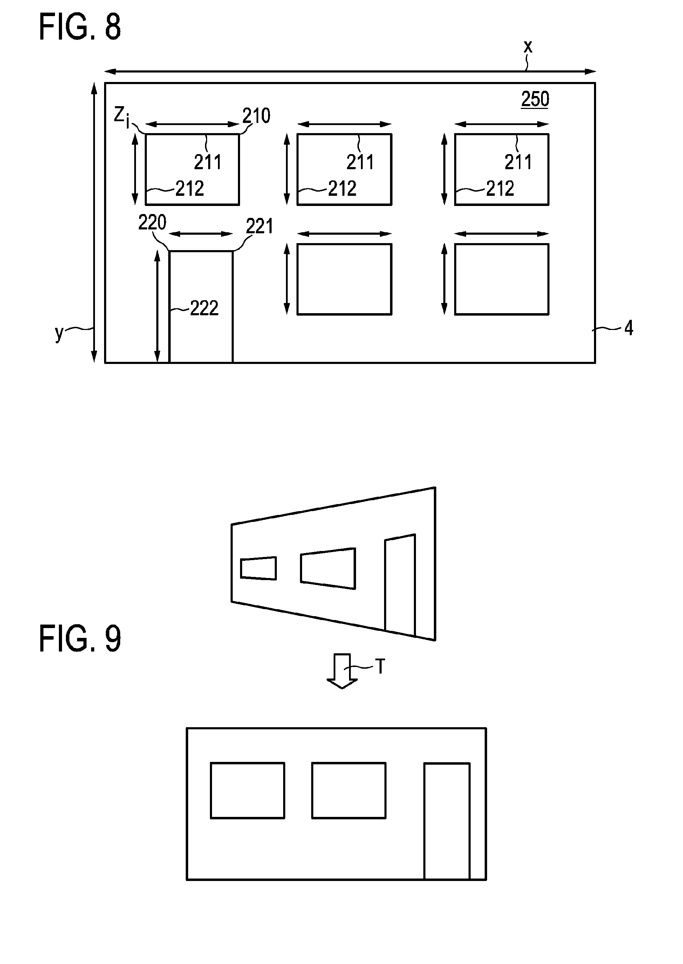

Eine solche Situation ist in Fig.8 beispielhaft dargestellt. Das fotoelektrische Bild 4 der Fig.8 zeigt ein Abbild einer Gebäudefassade in einer Pixelebene deren Koordinaten wiederum mit x', y' bezeichnet sind. Fünf Fenster 210 und eine Tür 220 sind erkennbar. Vorliegend ist die Bildverarbeitungseinheit 62 ausgebildet, automatisch über eine einfache z.B. kontrastbasierte Bildfilterfunktion markante Kanten 221, 222 der Tür 220 und markante Kanten 211, 212 der Fenster 210 zu erkennen. Dazu kann auch eine Anzahl von markanten Zielpunkten $Z_i$ registriert werden, die sich als 2-Achsen-Kreuzpunkte der Fensterkanten 211, 212 oder der Türkanten 221, 222 als besonders kontrastreich bestimmen lassen. Jede der Kanten 211, 212, 221, 222 kann im Prinzip wie ein Pixelabstand (Δx', Δy') der Fig. 5 behandelt werden, d.h. mittels der Fokuslänge ΔF, der Distanz z1 und der Pixelgröße b kann dieser ein Abstandsmaß beispielsweise in der Einheit Meter [m] zugeordnet werden. Die Abstandsmaße sind in Fig. 8 beispielhaft und lediglich symbolisch durch Doppelpfeile eingezeichnet.

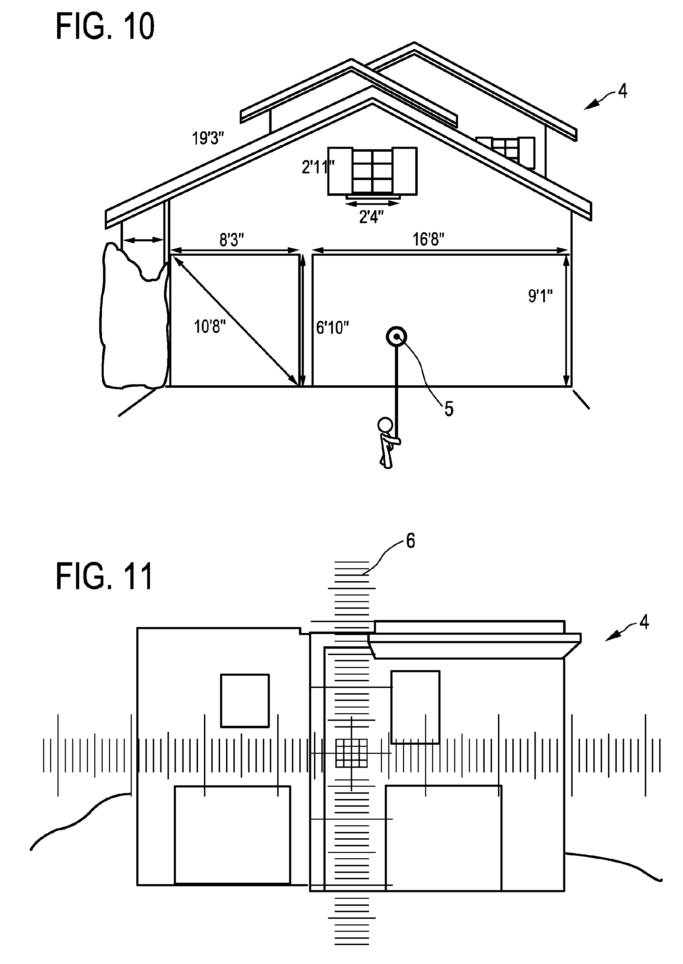

Das fotoelektrische Bild 4 kann in der in Fig. 8 gezeigten Form auf einer elektronischen Anzeigeeinrichtung, d.h. mit der Anzahl von Zielpunkten $Z_i$ den Kanten 211, 212, 221, 222 und den als Doppelpfeile symbolisch dargestellten Abstandsmaßen dargestellt werden. Der Anwender erhält also zusammen mit dem fotoelektrischen Bild 4 auch die jedenfalls näherungsweise Bemaßung der markanten Teile desselben. Ein Anwender kann auch durch Auswählen beispielsweise eines Fensters 210 über eine Touch-Screen-Funktion oder eine Bedien- und Eingabeanordnung 30 am Messgerät 100A, 100B ein Flächenmaß für ein Fenster 210 oder für eine Tür 220 abrufen, indem er das gewünschte Fenster 210 oder die gewünschte Tür 220 auswählt. Insbesondere kann ein Anwender auch die Fassade 230 des fotoelektrischen Bildes 4 auswählen, um ein Flächenmaß derselben anzeigen zu lassen. Eine beispielhafte fotographische Darstellung eines solchen Ergebnisses ist in Fig. 10 gezeigt. Das Auswahlsymbol 5 im fotoelektrischen Bild 4 kann dem Anwender anzeigen, dass das Abrufen eines Flächenmaßes - in Fig. 10 z.B. für das Garagentor - möglich ist.

Die anhand von Fig. 8 und Fig. 10 beschriebene zusätzliche Anzeige von Kantenmaßen oder sonstigen Abstandsmaßen zusammen mit dem fotoelektrischen Bild kann vergleichsweise einfach in einer im Abstandsmodul implementierten Applikation realisiert sein. Dazu kann ein geeigneter Algorithmus der Bildverarbeitungseinheit 62 ausgebildet sein, um beispielsweise Objektkanten zu erkennen und diese unter Verwendung des aus der Distanz z hervorgehenden Bildumrechnungsfaktors gemäß dem oben erläuterten Konzept automatisch zu bemaßen. In einer weiteren Anwendung wie sie in Fig. 11 gezeigt ist kann z.B. mittels eines Bildumrechnungsfaktors eine Strichplatte in das Bild eingeblendet werden, so dass reale Objektgrößen näherungsweise im Bild erkennbar abgelesen werden können.

Bezugnehmend auf Fig. 7 weist jedes der Messgeräte 100A, 100B vorliegend eine Anzahl von Koppelmodule K auf, die mit der Steuer- und Recheneinheit SE verbunden sind. Die Koppelmodule K sind vorliegend über mehrere weitere als Galerie ausgebildete Datenleitungen 67 mit der Steuer- und Recheneinheit SE verbunden. Ein erstes Koppelmodul ist in Form eines GPS-Moduls gebildet und so bezeichnet. Ein zweites Koppelmodul ist in Form eines Kompass KO gebildet. Ein drittes Koppelmodul ist in Form eines Neigungssensors N gebildet. So können beispielsweise zusätzliche Informationen wie GPS-Daten, Kompass-Daten und Neigungsdaten mit dem Messgerät 100A, 100B ermittelt werden und in diesem für eine Steuer- und Recheneinheit SE verfügbar gemacht werden. Vorteilhaft ist neben der Aufnahme der Bilder 4 über die fotoelektrische Bilderfassung in Form der Kamera und der Distanzwerte z und Abstandsmesswerte Δ also die gleichzeitige bzw. zeitnahe Aufnahme von weiteren Messwerten, wie z.B. die Messdaten einer GPS-Einheit oder eines digitalen Kompasses oder Messdaten von Neigungssensoren. Diese Messdaten geben zusätzliche Informationen über den Ort und die Richtung der Messung auf einen Messpunkt P1 und eignen sich z.B. zum Abgleichen der Messwerte mit einem Plan (PLAN). So kann durch Sensordatenfusion zumindest näherungsweise die Position in einem Raum sowie die Mess- bzw. Beobachtungsrichtung ermittelt werden. Darüberhinaus kann ein Modell des Raumes abgeleitet werden oder es kann über Pläne, CAD-Daten bzw. BIM (Building Information Modelling) die Position des Messgeräts im Gebäude bestimmbar sein. Über BIM und der bekannten Position- und Beobachtungsrichtung lassen sich z.B. virtuelle Objekte in Kamerabilder einblenden (Augmented Reality). Dies können z.B. nicht sichtbare, in Wände eingebettete Objekte oder noch nicht vorhandene Rohre, Befestigungselemente, Kabelkanäle, Steckdosen etc. sein.

Eine weitere vorteilhafte Anwendung eines Koppelmoduls K ist die Gesichtserkennung mit der Kamera. So könnte beispielsweise ein Laser der Distanzmesseinrichtung 20A, 20B deaktiviert werden, wenn sich eine Person im Strahlengang der Messstrahlung 1 befindet.

Es können auch von anderen Geräten ggfs. für spezielle Anwendungen erforderliche Daten über die Schnittstelle 71 oder die Bedien- und Eingabeanordnung 30 eingelesen oder eingegeben werden und für eine Steuer- und Recheneinheit SE verfügbar gemacht werden. Dies können beispielsweise Daten für Baumaterialien wie Wärmeleifinierte, Kosteneinheiten oder dergleichen sein und der Steuer- und Recheneinheit zur Verfügung gestellt werden. Auch kann die Steuer- und Recheneinheit SE derart eingerichtet sein, dass Abstandsmaße auf einer lateralen Oberfläche eines Zielobjektes 200 (also der Referenzfläche) -z.B. solche in Fig.10- genutzt werden, um eine jedenfalls näherungsweise Kostenanalyse oder Wärmeverlustangabe zur Verfügung zu stellen. Mit anderen Worten kann ein Messgerät 100A, 100B zur Verfügbarmachung der Abstandsmaße zusammen mit Zusatzinformationen bereits eingerichtet sein. So kann ein Anwender auf einer Baustelle vor Ort bereits wesentliche Angaben zu Kosten und erforderlichen Maßnahmen sowie Umfang derselben machen. Dies kann beispielsweise die Renovierung einer Fassade oder eine Wärmedämmung derselben oder auch die Renovierung eines Innenraums oder dergleichen betreffen.

Solche und andere zusätzliche Daten können dem Messgerät 100A, 100B zugeführt werden, vorteilhaft um eine bessere Attributierung der oben beschriebenen Abstandsmessungen zu erreichen. Die über die Koppelmodule K, die Schnittstelle 71 oder die Bedien- und Eingabeanordnung 30 verfügbaren oder eingebbaren Zusatzinformationen -gegebenenfalls auch handschriftliche Skizzen, Bemerkungen oder dergleichen- können beispielsweise in dem fotoelektrischen Bild 4 platziert werden.

Das in Fig. 10 gezeigte Symbol 5 kann im Rahmen einer weiteren vorteilhaften Anwendung z.B. als schnelle Messung einer zusammenhängenden Fläche auf Basis des Kamerabildes und mindestens einer Messdistanz dienen. Hierzu kann beispielsweise der Punkt im Symbol 5 am Garagentor der Fig. 10 angewählt und anschließend der Flächeninhalt desselben ermittelt werden. Durch Anwählen eines Fensters kann sofort die gesamte benötigte Glasfläche der Fassade und durch Anwählen der Hauswand kann deren Fläche ohne Fenster und Türen bestimmt werden. Diese und andere Funktionen sind äußerst zweckdienlich und vorteilhaft bei der Erstellung von Angeboten für Zubringerdienstleister wie Maler, Stuckateure, Fliesenleger oder Glaser und aufgrund der Applikation direkt auf einer Baustelle verfügbar.

Bei zusätzlicher Eingabe von verwendetem Baumaterial kann der Preis auf der Stelle automatisch ermittelt werden. Zusätzliche Informationen wie GPS-Daten, Kompass-Daten und Eingabe von Wärmeleifinierten (K-Wert) ermöglichen an Ort und Stelle die Berechnung von Wärmeverlusten und die dazu gehörenden Kosten.

Fig. 7 zeigt insgesamt die Systematik einer Steuer- und Recheneinheit SE und deren Peripherie im Rahmen der Distanzmesseinrichtung 20A, 20B bzw. der Bilderfassung 60A, 60B. Während die Distanzmesseinrichtung 20A, 20B eine Distanz z1 mit einem Distanzmaß in Meter [m] liefert, kann über die fotoelektrische Bilderfassung 60A, 60B zunächst eine Fokuslänge ΔF zur Bestimmung eines Referenzmaßes f im fotoelektrischen Bild geliefert werden. Aus diesen wird in einer Multiplikationseinheit des Abstandsmoduls 72 der Steuer- und Recheneinheit SE schließlich ein Maßstab M gebildet. In der oben beispielhaft erläuterten Weise ergibt sich das zugeordnete Zahlentripel der Distanz z1 sowie des lateralen Abstands Δ bzw. die Koordinatenabstände Δx, Δy dazu, für die zwei Bildpunkte Z1', Z2' -bzw. hier den Messpunkt P1'- jeweils in Meter. Wie erläutert kann dieses Zahlentripel über ein Koppelmodul K mit zusätzlichen Applikationen im Rahmen der BIM oder GPS oder Planerkennung zusammengeführt werden. Die Ergebnisse einer so zusammengeführten Messdaten-Zuordnung und Sammlung können gleichzeitig oder einzeln oder je nach Bedarf vom Anwender gruppiert in einer Sichtanzeige 40 des Messgeräts 100A, 100B angezeigt werden.

Fig. 7 zeigt auch eine vorteilhafte Weiterbildung der Steuer- und Recheneinheit SE und/oder Bildverarbeitungseinheit 62 mittels einem Transformationsmodul T. Wie in Fig. 9 im oberen Teil erkennbar ist, können Messobjekte eines Zielobjekts 200 in anderen nicht parallelen lateralen Oberflächen des Zielobjekts 200 eine perspektivische Verzerrung -z.B. wie hier dargestellt zu einem Fluchtpunkt- erfahren. Da hier parallele Linien in einem Fluchtpunkt konvergieren, kann mit einem geeigneten Algorithmus, insbesondere der Bildverarbeitungseinheit 62, eine perspektivische Entzerrung vorgenommen werden, deren Ergebnis in Fig. 9 im unteren Teil gezeigt ist. Die entsprechende Transformation kann vom Transformationsmodul T im Rahmen einer affinen Transformation des fotoelektrischen Bildes 4 durchgeführt werden. Objekte, die nicht in der lateralen Referenzebene 4 liegen, in der sich der Messpunkt P1 befindet, sind dann im fotoelektrischen Bild scheinbar kleiner bzw. größer - im Vergleich zu einer weiteren bzw. näheren Anordnung derselben relativ zur gemessenen Entfernung zum Messpunkt P1. Auch hier kann mit der Fluchtpunktanalyse eine Korrektur vorgenommen werden. Des Weiteren können mehrere Distanzmessungen mit den dazu gehörenden fotoelektrischen Bildern aufgenommen werden. Dem Konzept der Erfindung folgend ist dabei jedem einzelnen fotoelektrischen Bild 4 dieser Serie jeweils ein Messpunkt P1 exakt zugeordnet, da mit dem fotoelektrischen Bild aufgenommen. Die Sequenz von Paaren jeweils aus fotoelektrischem Bild 4 und Messpunkt Pj kann -bei Bedarf im Rahmen einer Applikation in einem implementierten Bildverarbeitungs-Algorithmus- perspektivisch korrigiert werden und anschließend zu einem einzigen Bild mit mehreren abgebildeten Messpunkten P1', P2', ... kombiniert werden. Diese Anwendung lässt sich als sehr effizienter Ansatz zu einem Building-Information-Modelling vom Anwender nutzen. Somit lassen sich auch sehr große Messobjekte, die nicht mit einem einzigen Bild erfasst werden können aufnehmen, stückweise aneinandersetzen und abschließend gemäß dem Konzept der Erfindung unter Zuhilfenahme einer Fokuslänge ΔF als Referenzmaß vermessen.

Auch können verschiedene zu jeweils einem fotoelektrischen Bild gehörende Distanzmessungen, z.B. zu einem Messpunkt P1, P2, P3 usw. vorgesehen sein und ermöglichen zudem eine genauere perspektivische Entzerrung. Dies liegt daran, dass aus den verschiedenen Messwerten und Messfleckpositionen Zusatzinformationen über die Winkel der Objektebenen abgeleitet werden können. Mit einem Trägheitsnavigationssystem (3-Achsen-Beschleunigungssensoren, 3-Achsen-Gyroskop oder dergleichen) kann zusätzlich die Bewegung des Messgeräts während der Messdatenaufnahme berücksichtigt werden. Auch solche und andere Transformationen lassen sich im Rahmen des Transformationsmoduls T realisieren, um dem Anwender abschließend eine in Fig. 9 unten gezeigte korrigierte und entzerrte Messfläche mit Bemaßung zur Verfügung zu stellen.

Des Weiteren kann die Rechen- und Steuereinheit ein Bewertungsalgorithmus-Modul enthalten, welche die Güte der Messpunkte prüft und einerseits ungültige Messpunkte (z.B. Messungen durch Türen oder Fenster oder an der Hauswand vorbei) eliminiert oder den Anwender geeignete Messpunkte im Kamerabild vorschlägt.

Wie aus Fig. 7 weiter ersichtlich kann in einem späteren Verfahrensschritt -etwa durch Wiederholen des in Fig. 5 und Fig. 6 dargestellten Vorgangs in einer Schleife S- ein oder mehrere fotoelektrische Bilder des gleichen Zielobjektes 200 oder andere mit dem Bild 4 zusammenhängende oder überlappende Ansichten des Zielobjektes 200 aufgenommen werden. So kann ein Panoramabild aus mehreren fotoelektrischen Bildern rechnerisch zusammengesetzt werden. Für den Fall enthält ein Panoramabild mehrere fotoelektrische Bilder oder Teile derselben, die jeweils einem anderen Messpunkt P1, P2, ... , $P_N$ zugeordnet sind, da sie sich aus den Einzelmessung und Einzelaufnahmen ergeben. Dies kann vorteilhaft sein, da die laterale Messung genauer und zuverlässiger wird.

**Patentansprüche**

1.   Messgerät (100A, 100B), insbesondere in Form eines Handgeräts, für eine berührungslose Messung von Abständen bei einem Zielobjekt (200), aufweisend:

- ein Gehäuse (10), insbesondere ein zur händischen Benutzung ausgebildetes Gehäuse (10);
- eine in dem Gehäuse (10) angeordnete, optische Messstrahlung (1) nutzende Distanzmesseinrichtung (20A, 20B), mittels welcher die Distanz (z) zwischen einem Referenzpunkt (NP) und wenigstens einem Messpunkt (P1) am Zielobjekt (200) berührungslos messbar ist, insbesondere mittels einer Laufzeitmessung;
- eine in dem Gehäuse angeordnete fotoelektrische Bilderfassung (60A, 60B), mit einer Sucher- und Kameraoptik (61) sowie einen diese verbindenden Bildpfad zur Erfassung von Zielpunkten (Z1, Z2) des Zielobjekts (200) und einer Bildverarbeitungseinheit (62) zur Erstellung eines fotoelektrischen Bildes (4) des Zielobjektes (200),
- eine Steuer und Recheneinheit (SE) mittels welcher das Bild der Bildverarbeitungseinheit (62) zur Anzeige bringbar ist,
**dadurch gekennzeichnet, dass**
- die Bildverarbeitungseinheit (62) ausgebildet ist, wenigstens eine Anzahl der Zielpunkte (Z1, Z2), insbesondere zusätzlich den Messpunkt (P1), als Anzahl von Bildpunkten (Z1', Z2') in genau einem einzigen fotoelektrischen Bild (4) zu definieren,
- die Steuer- und Recheneinheit (SE) ausgebildet ist, die Distanz (z1) des Referenzpunkts (NP) zum Messpunkt (P1) wenigstens einem der Bildpunkte (Z1', Z2') zuzuordnen und die Zuordnung für eine Weiterverarbeitung verfügbar zu machen.

2.   Messgerät nach Anspruche 1 **dadurch gekennzeichnet, dass** die Steuer- und Recheneinheit (SE) ein Abstandsmodul (A) aufweist, das ausgebildet ist, einen Abstand zwischen einem ersten Bildpunkt (Z1') und einem zweiten Bildpunkt (Z2') als Pixelabstand (Δ') zu definieren und dem Pixelabstand (Δ') ein Abstandsmaß (Δ) der Zielpunkte (Z1, Z2) zuzuordnen.

3. Messgerät nach Anspruch 1 oder 2 **dadurch gekennzeichnet, dass** das Abstandsmodul einen Eingang für wenigstens ein Referenzmaß aufweist und ausgebildet ist, aus dem wenigstens einen Referenzmaß (f) zumindest näherungsweise einen Bildmaßstab (M) zu bestimmen, mittels dem einem Pixelabstand ($\Delta$') ein Abstandsmaß ($\Delta$) zuzuordnen ist.

4. Messgerät nach einem der Ansprüche 1 bis 3 **dadurch gekennzeichnet, dass** das wenigstens eine Referenzmaß wenigstens umfasst:

    eine Fokuslänge ($\Delta$F[m]) der Sucheroptik und Kameraoptik (61) und/oder
    eine Pixelgröße (b[m]), insbesondere
    ein Bildmaßstab (M) als Verhältnis aus einer Fokuslänge ($\Delta$F[m]) und einer Distanz (z1 [m]) multipliziert mit einer Pixelgröße (b[m]) bestimmt ist.

5. Messgerät (100A, 100B) nach einem der Ansprüche 1 bis 4 **dadurch gekennzeichnet, dass** das genau eine einzige fotoelektrische Bild (4) aus einer einzigen Aufnahme des Zielobjekts (200) resultiert und dem fotoelektrischen Bild (4) genau ein Messpunkt (P1) zugeordnet ist, insbesondere die Anzahl von Zielpunkte (Z1, Z2) in einer unter anderem mittels dem Messpunkt (P1) definierten Ebene in wenigstens dem genau einen einzigen fotoelektrischen Bild (4), insbesondere in einer Anzahl solcher Bilder (4) definiert sind.

6. Messgerät nach einem der Ansprüche 1 bis 5 **dadurch gekennzeichnet, dass** das Abstandsmodul und/oder die Bildverarbeitungseinheit (62) ausgebildet ist, eine Anzahl von Abstandsmaße zwischen einer Anzahl von Zielpunkten (Z1, Z2) zu definieren.

7. Messgerät (100A, 100B) nach einem der Ansprüche 1 bis 6 **dadurch gekennzeichnet, dass** die Steuer- und Recheneinheit (SE) ein Fügemodul aufweist, das ausgebildet ist, eine Anzahl von einzelnen je aus einer einzigen Aufnahme des Zielobjekts (200) resultierende fotoelektrische Bildern (4) mit je genau einem zugeordneten Messpunkt (P1), zu kombinieren, insbesondere zu einem Panoramabild zusammenzusetzen.

8. Messgerät nach einem der Ansprüche 1 bis 7 **dadurch gekennzeichnet, dass** das Abstandsmodul (A) ausgebildet ist, eine Anzahl von Abstandsmaße zwischen einer Anzahl von Zielpunkten (Z1, Z2) einem Pixelabstand ($\Delta$') von Bildpunkten (Z1', Z2') des fotoelektrischen Bildes (4), insbesondere eines Panoramabildes, zuzuordnen.

9. Messgerät nach einem der Ansprüche 1 bis 8 **dadurch gekennzeichnet, dass** das Abstandsmodul (A) ausgebildet ist, ein Flächenmaß innerhalb eines durch eine Anzahl von Zielpunkten (Z1, Z2) definierten Polyeders bei zugeordneten Bildpunkten (Z1', Z2') des fotoelektrischen Bildes (4), insbesondere Panoramabildes, zu definieren.

10. Messgerät nach einem der Ansprüche 1 bis 9 **dadurch gekennzeichnet, dass** eine elektronische Sichtanzeige (40) im Gehäuse (10) ausgebildet ist, wenigstens ein Abstandsmaß und/oder Flächenmaß im Bild anzuzeigen, insbesondere ohne die Distanz des Referenzpunkts (NP) zum Messpunkt (P1) anzuzeigen.

11. Messgerät nach einem der Ansprüche 1 bis 10 **dadurch gekennzeichnet, dass**
eine elektronische Sichtanzeige (40) im Gehäuse (10) ausgebildet ist, alternativ oder zusätzlich zum Abstandsmaß eine Distanz des Referenzpunkts (NP) zum Messpunkt (P1) anzuzeigen.

12. Messgerät nach einem der Ansprüche 1 bis 11 **dadurch gekennzeichnet, dass** die fotoelektrische Bilderfasssung (60A, 60B) eine einzige Sucheroptik und Kameraoptik (61) aufweist.

13. Messgerät nach einem der Ansprüche 1 bis 12 **dadurch gekennzeichnet, dass**
ein Bildpfad der Bilderfassung (60A, 60B) über eine separate Sucheroptik biaxial zu einem Sende- und/oder Empfangspfad der Distanzmesseinrichtung (20A, 20B) geführt ist oder der Bildpfad über ein gemeinsames Ausgangselement der Sende- und/oder Empfangsoptik (22, 23) einerseits sowie der Sucheroptik andererseits koaxial zum Sende- und/oder Empfangspfad (24, 25) geführt ist.

14. Messgerät nach einem der Ansprüche 1 bis 13 **dadurch gekennzeichnet, dass**
die Steuer- und Recheneinheit (SE) und/oder die Bildverarbeitungseinheit (62) ein Transformationsmodul (T) aufweist, das ausgebildet ist, dem Abstandsmodul (A) ein Korrekturmaß für eine perspektivische Verzerrung eines Zielobjektes (200) zur Verfügung zu stellen, insbesondere ein Korrekturmass für ein von einer Anzahl von Zielpunkten definierten Polyeders, insbesondere eines auf einen Fluchtpunkt verzerrten Polyeders.

15. Messgerät nach einem der Ansprüche 1 bis 14 **dadurch gekennzeichnet, dass** markante Zielpunkte, wie Kantenendpunkte, 2-Achsen-Kreuzpunkte 3-Achsen-Kreuzpunkte, Fluchtpunkte, Eichpunkte oder dergleichen mittels der Bildverarbeitungseinheit (62) automatisch oder mittels einer Bedien- und Eingabeanordnung (30) und/oder einer Sichtanzeige (40) als Anzahl von Bildpunkte auswählbar sind.

16. Messgerät nach einem der Ansprüche 1 bis 15 **dadurch gekennzeichnet, dass** die Steuer- und Recheneinheit (SE) ein Koppelmodul (K) aufweist, mittels dem ein Ausgang des Abstandsmoduls (A) mit einem Eingang eines Planspeichers (PLAN), eines GPS-Systems (GPS) oder dergleichen verfügbarer Abstandsinformationsträger (N, KO) koppelbar ist.

17. Verfahren zur berührungslosen Messung von Abständen bei einem Zielobjekt (200), insbesondere mit einem Messgerät (100A, 100B), insbesondere in Form eines Handgeräts, nach einem der Ansprüche 1 bis 16, aufweisend die Schritte:

   - berührungsloses Messen einer Distanz (z1) zwischen einem Referenzpunkt (NP) und wenigstens einem Messpunkt (P1) am Zielobjekt (200), insbesondere mittels einer Laufzeitmessung;
   - fotoelektrisches bildgebendes Erfassen von Zielpunkten (Z1, Z2) des Zielobjekts (200) und Erstellen eines fotoelektrischen Bildes (4) des Zielobjektes (200),
   - Anzeigen des Bildes (4)
   **dadurch gekennzeichnet, dass**
   - definieren wenigstens einer Anzahl der Zielpunkte (Z1, Z2), insbesondere zusätzlich den Messpunkt (P1), als Anzahl von Bildpunkte (Z1', Z2') in genau einem einzigen fotoelektrischen Bild (4),
   - Zuordnen der Distanz (z1) des Referenzpunkts (NP) zum Messpunkt (P1) zu wenigstens einem der Bildpunkte (Z1', Z2') und zur Verfügung stellen der Zuordnung für eine Weiterverarbeitung.

18. Verfahren nach Anspruche 17 **dadurch gekennzeichnet, dass** ein Abstand zwischen einem ersten Bildpunkt (Z1') und einem zweiten Bildpunkt (Z2') als Pixelabstand (Δ') definiert wird und dem Pixelabstand (Δ') ein Abstandsmaß (Δ) zugeordnet wird.

19. Verfahren nach Anspruch 17 oder 18 **dadurch gekennzeichnet, dass** aus wenigstens einem Referenzmaß (f), umfassend:

   eine Fokuslänge (ΔF[m]) der Sucheroptik und Kameraoptik (61) und/oder
   eine Pixelgröße (b[m]), zumindest näherungsweise ein Bildmaßstab (M) bestimmt wird, mittels dem einem Pixelabstand (Δ') ein Abstandsmaß (Δ) zuzuordnen ist.

20. Messgerät nach einem der Ansprüche 17 bis 19 **dadurch gekennzeichnet, dass** ein Bildmaßstab (M) als Verhältnis aus einer Fokuslänge (ΔF[m]) und einer Distanz (z1[m]) multipliziert mit einer Pixelgröße (b[m]) bestimmt wird.

FIG. 1A

FIG. 1B

FIG. 2A

FIG. 2B

# FIG. 3A

# FIG. 3B

FIG. 4A

FIG. 4B

EP 2 447 735 A1

**FIG. 5**

z

0

4

256

x

0

100A, 100B

z1 = 132m

$\Delta$ [m]

$\Delta F[m]$

P1 ⊗

b[m]

Z2 ⊗

$(\Delta x', \Delta y') = (2, 13)$

$\Delta'$

⊗ P1' $(x_1', y_1')$

⊗

Z2' $(x_2', y_2')$

$(\Delta x', \Delta y', z1) = (2, 13, 102)$

$$m = \frac{\Delta}{\Delta'} = \frac{\Delta F}{z1} \cdot b$$

128 y

**FIG. 6**

(z1)

A

z1 [m]

$(\Delta x', \Delta y') \otimes f / z1$

$f = \Delta F[m] \cdot b[m]$

$(\Delta x', \Delta y')$

$(\Delta x, \Delta y, z1) [m]$

$\Delta F \cdot b$

100A, 100B

60A, 60B

$\underline{4}$ BILD

20A, 20B

DISTANZ $\underline{z1}$

SE

S

T

$\Delta F[m] \cdot b[m]$ ⊗ $\underline{M}$ $72$ ⊗ $(z1) \cdot [m]$

$(\Delta x, \Delta y, z1)[m]$

K

$\underline{40}$

| BIM | PLAN | GPS | KO | N |
|-----|------|-----|-----|---|

FIG. 7

FIG. 8

FIG. 9

## FIG. 10

## FIG. 11

Europäisches
Patentamt

European
Patent Office

Office européen
des brevets

**EUROPÄISCHER RECHERCHENBERICHT**

Nummer der Anmeldung

EP 11 18 3405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/202662 A1 (CHUNG JIYOON [US]) 12. August 2010 (2010-08-12) * Zusammenfassung; Abbildungen 2,6,7 * * Absätze [0027] - [0031], [0046] - [0058] * | 1-20 | INV. G01S17/02 G01C11/02 G01C15/00 |
| X | DE 10 2006 054324 A1 (BOSCH GMBH ROBERT [DE]) 21. Mai 2008 (2008-05-21) * Zusammenfassung * * Absätze [0009], [0012], [0014], [0015], [0051] * | 1,17 | |
| A | EP 1 605 230 A1 (TOPCON CORP [JP]) 14. Dezember 2005 (2005-12-14) * Zusammenfassung; Abbildung 4 * | 1,12,13, 17 | |
| A,D | WO 00/25089 A1 (MEASUREMENT DEVICES LTD [GB]; BALL STEPHEN LESLIE [GB]) 4. Mai 2000 (2000-05-04) * Seite 17, Zeile 33 - Seite 18, Zeile 11 * * Seite 25, Zeile 31 - Seite 26, Zeile 8 * | 1-20 | |

**RECHERCHIERTE SACHGEBIETE (IPC)**

G01S
G01C

Der vorliegende Recherchenbericht wurde für alle Patentansprüche erstellt

| Recherchenort | Abschlußdatum der Recherche | Prüfer |
|---|---|---|
| Den Haag | 14. März 2012 | Roost, Joseph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 18 3405

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-03-2012

| Im Recherchenbericht angeführtes Patentdokument | Datum der Veröffentlichung | Mitglied(er) der Patentfamilie | Datum der Veröffentlichung |
|---|---|---|---|
| US 2010202662 A1 | 12-08-2010 | KEINE | |
| DE 102006054324 A1 | 21-05-2008 | DE 102006054324 A1<br>WO 2008058788 A1 | 21-05-2008<br>22-05-2008 |
| EP 1605230 A1 | 14-12-2005 | CN 1707219 A<br>DE 602005003057 T2<br>EP 1605230 A1<br>JP 4427389 B2<br>JP 2005351745 A<br>US 2005275824 A1 | 14-12-2005<br>07-08-2008<br>14-12-2005<br>03-03-2010<br>22-12-2005<br>15-12-2005 |
| WO 0025089 A1 | 04-05-2000 | AU 6355799 A<br>US 7184088 B1<br>WO 0025089 A1 | 15-05-2000<br>27-02-2007<br>04-05-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10112833 C1
- WO 0025089 A
- EP 2026077 A1
- EP 2023077 A1
- WO 2008155657 A
- JP 08021878 B
- EP 1407227 B1
- DE 10055510 B4